# EUROPEAN PATENT APPLICATION

(11) **EP 4 572 368 A1**
(43) Date of publication of application: **18.06.2025**
(21) Application number: 23852327.8
(22) Date of filing: 20.07.2023
(51) Int. Cl.: H04W 24/02, H04W 8/24

(54) **COMMUNICATION DEVICE, DATA SET PROVIDING DEVICE, METHOD FOR TRAINING AI/ML MODEL, AND METHOD FOR PROVIDING INFORMATION SERVING AS BASE FOR TRAINING AI/ML MODEL**

(30) Priority: 09.08.2022 JP 2022127375
(71) Applicant: Sony Group Corporation, Tokyo 108-0075 (JP)
(72) Inventor: MATSUDA Hiroki, Tokyo 108-0075 (JP); TSUDA Shinichiro, Tokyo 108-0075 (JP)
(74) Representative: Witte, Weller & Partner Patentanwälte mbB
(86) International application number: PCT/JP2023/026690
(87) International publication number: WO 2024/034351

(57) **Abstract**

[Object] To provide a communication apparatus, a data set providing apparatus, a method for training an AI/ML model, and a method for providing information on which to base learning of an AI/ML model that make it possible to perform signal processing without being aware of a difference in AI/ML model.

[Solving Means] A communication apparatus includes a signal processor that includes an AI/ML model; a receiver that receives, from another communication apparatus, information on which to base learning; and a controller that sets the AI/ML model on the basis of the information on which to base learning.

## Description

### Technical Field

The present disclosure relates to a communication apparatus, a data set providing apparatus, a method for training an AI/ML model, and a method for providing information on which to base learning of an AI/ML model.

### Background Art

Today, Beyond 5G and 6G are under discussion as next-generation mobile communication systems in the 3rd Generation Partnership Project.

Further improvements in enhanced mobile broadband (eMBB), massive machine type communications (mMTC), and ultra-reliable and low-latency communications (URLLC) are expected in the Beyond 5G and 6G radio access schemes. In order to achieve such improvements, the use of an artificial intelligence / machine learning (AI/ML) model to process a signal transmitted and received through wireless communication is under discussion.

### Citation List

### Non-Patent Literature

Non-Patent Literature 1: R1-2203280, "General aspects of AI PHY", Ericsson, 3GPP TSG-RAN WG1 Meeting #109-e, Electronic Meeting, May 16th - 27th, 2021

### Disclosure of Invention

### Technical Problem

When, for example, signal processing is performed between an AI/ML model of a terminal apparatus and an AI/ML model of a base station, there is a possibility that the signal processing between the respective AI/ML models will not be performed properly if specifications or implementations of the respective AI/ML models are different from each other.

Further, when, for example, signal processing is performed between an AI/ML model of each one of a plurality of terminal apparatuses and an AI/ML model of a base station, there is a possibility that the signal processing between the terminal apparatus and the base station will not be performed properly if specifications or implementations of the respective AI/ML models of the plurality of terminal apparatuses are different from each other due to, for example, a difference in terminal vendor.

The present disclosure addresses the issues described above, and it is an object of the present disclosure to provide a communication apparatus, a data set providing apparatus, a method for training an AI/ML model, and a method for providing information on which to base learning of an AI/ML model that make it possible to perform signal processing without being aware of a difference in AI/ML model.

### Solution to Problem

A communication apparatus according to the present disclosure includes a signal processor that includes an AI/ML model; a receiver that receives, from another communication apparatus, information on which to base learning; and a controller that sets the AI/ML model on the basis of the information on which to base learning.

Further, a data set providing apparatus according to the present disclosure is a data set providing apparatus that is accessible in common by communication apparatuses of different vendors, the data set providing apparatus including a storage that stores therein information on which to base learning of an AI/ML model; a receiver that receives, from a communication apparatus, a request for provision of the information on which to base learning of the AI/ML model; and a transmitter that transmits, to the communication apparatus, the information on which to base learning of the AI/ML model.

Furthermore, a method for training an AI/ML model according to the present disclosure includes receiving information on which to base learning; and setting the AI/ML model on the basis of the information on which to base learning.

Further, a method for providing information on which to base learning of an AI/ML model according to the present disclosure includes receiving a request for provision of the information on which to base learning; and transmitting the information on which to base learning to a transmission source that has transmitted the request for the provision.

### Brief Description of Drawings

[Fig. 1] Fig. 1 illustrates a configuration of a wireless communication system according to a first embodiment.
[Fig. 2] Fig. 2 illustrates a configuration of a management apparatus.
[Fig. 3] Fig. 3 illustrates a configuration of a base station.
[Fig. 4] Fig. 4 illustrates a configuration of a relay station.
[Fig. 5] Fig. 5 illustrates a configuration of a terminal.
[Fig. 6] Fig. 6 is a block diagram illustrating detailed configurations of the terminal apparatus and the base station.
[Fig. 7] Fig. 7 illustrates a configuration of a data set providing apparatus.
[Fig. 8] Fig. 8 illustrates an example of a configuration of a wireless communication network that includes the data set providing apparatus.
[Fig. 9] Fig. 9 is a diagram used to describe an example of a procedure in which a base station includes, in system information, information on which to base learning of an AI/ML model and transmits the system information to each of different terminal apparatuses.
[Fig. 10] Fig. 10 is a diagram used to describe an example of a procedure in which a base station includes, in quasistatic information (RRC signaling), information on which to base learning of an AI/ML model and transmits the quasistatic information to each of different terminal apparatuses.
[Fig. 11] Fig. 11 is a diagram used to describe an example of a procedure in which a base station includes, in each of system information and quasistatic information (RRC signaling), information on which to base learning of an AI/ML model and transmits the system information and the quasistatic information to each of different terminal apparatuses.
[Fig. 12] Fig. 12 is a diagram used to describe an example of a procedure in which a base station receives, from a data set providing apparatus, information on which to base learning of an AI/ML model; includes, in each of system information and quasistatic information (RRC signaling), the information on which to base learning of an AI/ML model; and transmits the system information and the quasistatic information to each of different terminal apparatuses.
[Fig. 13] Fig. 13 is a diagram used to describe an example of a procedure in which each of a base station and a terminal apparatus receives, from a data set providing apparatus, information on which to base learning of an AI/ML model.
[Fig. 14A] Fig. 14A is a diagram used to describe an example of a procedure in which a terminal apparatus is handed over to a different base station.
[Fig. 14B] Fig. 14B is a diagram used to describe the example of the procedure in which the terminal apparatus is handed over to the different base station. Mode(s) for Carrying Out the Invention

Embodiments of the present disclosure will now be described in detail below with reference to the drawings. In the figures, similar or corresponding structural elements will be denoted by the same reference symbol, and detailed descriptions thereof are omitted as appropriate.

### [First Embodiment]

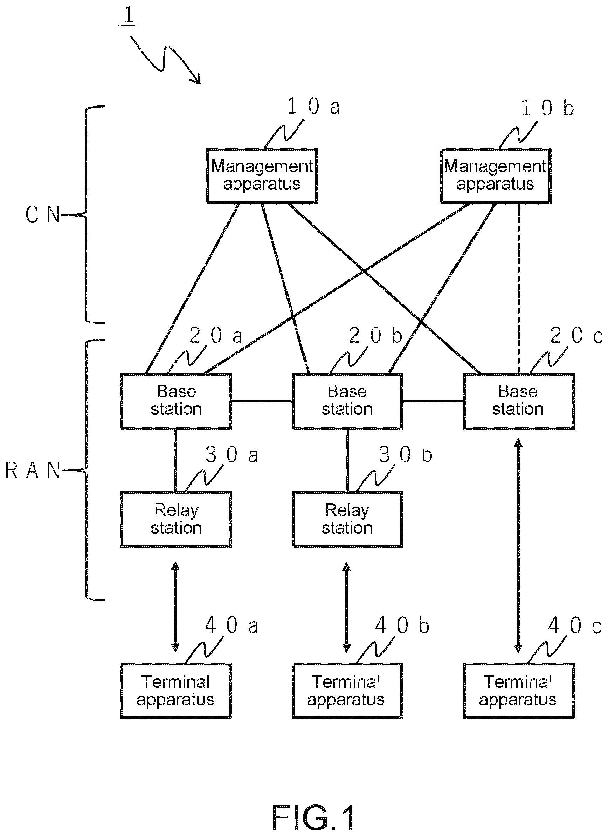

Fig. 1 illustrates a configuration of a wireless communication system 1 according to a first embodiment of the present disclosure. The wireless communication system 1 includes a management apparatus 10, a base station 20, a relay station 30, and a terminal apparatus 40. The wireless communication system 1 provides a user with a wireless network that enables mobile communication by wireless communication apparatuses included in the wireless communication system 1 operating cooperatively. The wireless network of the first embodiment includes a radio access network RAN and a core network CN. In the first embodiment, the wireless communication apparatus is an apparatus that includes a function of wireless communication, and the base station 20, the relay station 30, and the terminal apparatus 40 each correspond to the wireless communication apparatus in the example illustrated in Fig. 1.

The wireless communication system 1 may include a plurality of management apparatuses 10, a plurality of base stations 20, a plurality of relay stations 30, and a plurality of terminal apparatuses 40. In the example illustrated in Fig. 1, the wireless communication system 1 includes management apparatuses 10a and 10b that correspond to the management apparatuses 10, and includes base stations 20a, 20b, and 20c that correspond to the base stations 20. Further, the wireless communication system 1 includes relay stations 30a and 30b that are the relay stations 30, and includes terminal apparatuses 40a, 40b, and 40c that are the terminal apparatuses 40.

Each of the wireless communication apparatuses illustrated in Fig. 1 may be considered an apparatus in a logical sense. In other words, some of the respective wireless communication apparatuses may be implemented by, for example, virtual machines (VMs), containers, or dockers and respectively mounted on physically identical pieces of hardware.

The wireless communication system 1 may support a radio access technology (RAT) such as Long Term Evolution (LTE) or New Radio (NR). Each of the LTE and the NR is a type of cellular communication technology, and enables the terminal apparatus 40 to perform mobile communication by arranging, in the form of cells, a plurality of areas covered by the base station 20.

A radio access scheme of the wireless communication system 1 is not limited to, for example, the LTE or the NR, and may be another radio access scheme such as wideband code-division multiple access (W-CDMA) or code-division multiple access 2000 (cdma2000).

The base station 20 and relay station 30 included in the wireless communication system 1 may be a ground station or a non-ground station. The non-ground station may be a satellite station or an aircraft station. When the non-ground station is a satellite station, the wireless communication system 1 may be a bent-pipe (transparent) mobile satellite communication system.

In the first embodiment, the ground station (also referred to as ground base station) refers to a base station (including a "relay station") that is installed on the ground. Here, the term "on the ground" has a broad meaning, and includes not only "on land" but also "under the ground", "on water", and "in water". Note that, in the following description, the term "ground station" may be replaced with the term "gateway".

Note that a base station of the LTE may be referred to as an evolved Node B (eNodeB) or an eNB. Further, a base station of the NR may be referred to as a gNodeB or a gNB. In the LTE and the NR, a terminal apparatus (also referred to as a "mobile station" or a "terminal") may be referred to as user equipment (UE).

In the first embodiment, the concept of the wireless communication apparatus includes not only a portable mobile object apparatus (a terminal apparatus) such as a mobile terminal but also an apparatus installed in a structure or a mobile object. The structure or mobile object itself may be considered the wireless communication apparatus. Further, the concept of the wireless communication apparatus includes not only the terminal apparatus 40 but also the base station 20 and the relay station 30. The wireless communication apparatus is a type of processing apparatus or a type of information processing apparatus. The wireless communication apparatus can also alternatively be phrased as a transmission apparatus or a reception apparatus.

Configurations of wireless communication apparatuses that are included in the wireless communication system 1 are specifically described below. Note that the configurations of the respective wireless communication apparatuses described below are merely examples. The configurations of the wireless communication apparatuses may be different from configurations describe below.

### (Configuration of Management Apparatus)

The management apparatus 10 is an apparatus that manages a wireless network. For example, the management apparatus 10 is an apparatus that manages communication performed by the base station 20. The management apparatus 10 includes a function of, for example, a mobility management entity (MME) when the core network CN is an evolved packet core (EPC). The management apparatus 10 includes a function of, for example, an access and mobility management function (AMF) and/or of a session management function (SMF) when the core network CN is a 5G core network (5GC). Note that the function of the management apparatus 10 is not limited to the MME, the AMF, and the SMF. The management apparatus 10 may be an apparatus that includes a function of a network slice selection function (NSSF), an authentication server function (AUSF), or unified data management (UDM). The management apparatus 10 may be an apparatus that includes a function of a home subscriber server (HSS).

The management apparatus 10 may include a function of a gateway. The management apparatus 10 may include a function of a serving gateway (S-GW) or a packet data network gateway (P-GW) when the core network CN is an EPC. The management apparatus 10 may include a function of a user plane function (UPF) when the core network CN is a 5GC. The management apparatus 10 does not necessarily have to be an apparatus that is included in the core network CN. The management apparatus 10 may be an apparatus that serves as a radio network controller (RNC) when the core network CN is a core network of wideband code-division multiple access (W-CDMA) or code-division multiple access 2000 (cdma2000).

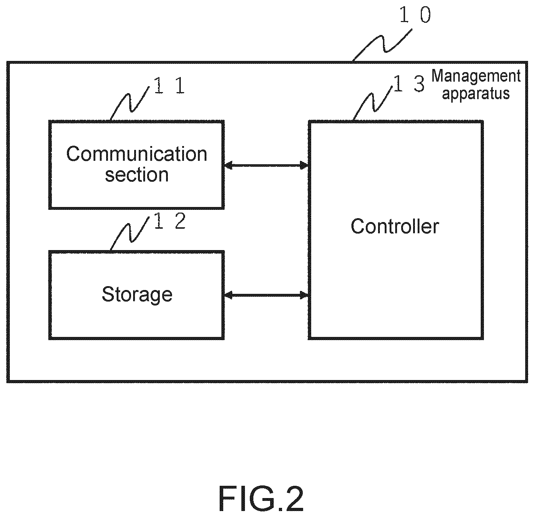

Fig. 2 illustrates a configuration of the management apparatus 10 according to the first embodiment. The management apparatus 10 includes a communication section 11, a storage 12, and a controller 13. Note that Fig. 2 illustrates a functional configuration, and a hardware configuration may be different from the configuration illustrated in Fig. 2. Further, functions of the management apparatus 10 may be statically or dynamically distributed to be provided to a plurality of physically separated configurations. The management apparatus 10 may include a plurality of server apparatuses.

The communication section 11 is a communication interface used to communicate with a wireless communication apparatus (such as the base station 20 or the relay station 30). The communication section 11 may be a network interface or an apparatus connection interface. The communication section 11 may be a local area network (LAN) interface such as a network interface card (NIC), or may be a Universal Serial Bus (USB) interface including, for example, a USB host controller or a USB port. The communication section 11 may be a wired interface or a wireless interface. The communication section 11 serves as a communication device of the management apparatus 10. The communication section 11 is controlled by the controller 13.

The storage 12 is a data readable/writable storage apparatus such as a dynamic random access memory (DRAM), a static random access memory (SRAM), a flash memory, or a hard disk. The storage 12 serves as a storage device of the management apparatus 10. For example, the storage 12 stores therein a connection state of the terminal apparatus 40. The storage 12 stores therein a state of radio resource control (RRC) of the terminal apparatus 40 and a state of EPS connection management (ECM) or 5G system connection management (CM). The storage 12 may serve as a home memory that stores therein position information regarding a position of the terminal apparatus 40.

The controller 13 is a controller that controls each component of the management apparatus 10. The controller 13 may be implemented by a processor such as a central processing unit (CPU) or a micro processing unit (MPU). In particular, the controller 13 may be implemented by a processor executing, using a random access memory (RAM) or the like as a working region, various programs stored in a storage apparatus situated inside of the management apparatus 10. The controller 13 may be implemented by an integrated circuit such as an application specific integrated circuit (ASIC) or a field programmable gate array (FPGA). Any of the CPU, the MPU, the ASIC, and the FPGA can be considered a controller.

### (Configuration of Base Station)

The base station 20 is a wireless communication apparatus that wirelessly communicates with the terminal apparatus 40. The base station 20 may wirelessly communicate with the terminal apparatus 40 through the relay station 30, or may wirelessly communicate with the terminal apparatus 40 directly.

The base station 20 is an apparatus that corresponds to a wireless base station (such as a base station, Node B, eNB, or gNB) or a wireless access point (an access point). The base station 20 may be a wireless relay station. The base station 20 may be an optical extension apparatus called a remote radio head (RRH). The base station 20 may be a reception station such as a field pickup unit (FPU). The base station 20 may be an integrated access and backhaul (IAB) donor node or IAB relay node that provides a wireless access link and a wireless backhaul link using time division multiplexing, frequency division multiplexing, or spatial division multiplexing.

A wireless access technology used by the base station 20 may be a cellular communication technology. The wireless access technology used by the base station 20 may be a wireless LAN technology. The wireless access technology used by the base station 20 may be a low-power wide-area (LPWA) communication technology. Note that the wireless access technology used by the base station 20 is not limited thereto, and may be another wireless access technology. Wireless communication used by the base station 20 may be wireless communication using millimeter waves. The wireless communication used by the base station 20 may be wireless communication using radio waves, or wireless communication using infrared light or visible light, that is, optical wireless communication.

The base station 20 may be capable of performing non-orthogonal multiple access (NOMA) communication with the terminal apparatus 40. The NOMA communication refers to communication (transmission, reception, or both of them) using non-orthogonal resources. The base station 20 may be capable of performing the NOMA communication with another base station 20.

The base stations 20 may be capable of communicating with the core network CN through an interface between the base station and the core network CN, such as an S1 interface. This interface may be a wired or wireless interface. The base station 20 may be capable of communicating with another base station through an interface between base stations, such as an X2 interface. This interface may be a wired or wireless interface.

The concept of the base station (also referred to as a "base station apparatus") includes not only a donor base station but also a relay base station (also referred to as a "relay station"). The concept of the base station includes not only a structure including a function of the base station but also an apparatus installed in the structure.

Examples of the structure include buildings such as a high-rise building, a house, a steel tower, station facilities, airport facilities, harbor facilities, and a stadium. The concept of the structure includes not only buildings but also non-building structures such as a tunnel, a bridge, a dam, a wall, and an iron pillar; and facilities such as a crane, a gate, and a windmill. The concept of the structure includes not only structures on land (on the ground in a narrow sense) or under the ground but also structures on water such as a pier or a megafloat, and structures in water such as marine observation facilities. The base station can also alternatively be phrased as an information processing apparatus.

The base station 20 may be a fixed station, or a movable wireless communication apparatus, that is, a mobile station. The base station 20 may be an apparatus installed in a mobile object, or may be the mobile object itself. A relay station that has the mobility can be considered the base station 20 serving as a mobile station. An apparatus, such as a vehicle, an unmanned aerial vehicle (UAV) represented by a drone, or a smartphone, that originally has the mobility and includes at least a portion of a function of a base station, can also be considered the base station 20 serving as a mobile station.

The mobile object may be a mobile terminal such as a smartphone or a mobile phone. The mobile object may be a mobile object (a vehicle such as an automobile, a bicycle, a bus, a truck, a motorcycle, a train, and a linear motor car) that moves on land (on the ground in a narrow sense), or a mobile object (such as a subway) that moves under the ground (for example, in a tunnel).

The mobile object may be a mobile object (such as vessels including a passenger ship, a cargo ship, and a hovercraft) that moves on water, or a mobile object (such as submersible ships including a submersible, a submarine, and an unmanned submersible machine) that moves in water.

The mobile object may be a mobile object (such as aircraft including an airplane, an airship, and a drone) that moves in the atmosphere of the earth.

The base station 20 may be a ground base station (a ground station) installed on the ground. The base station 20 may be a base station provided to a structure on the ground, or may be a base station installed in a mobile object that moves on the ground. The base station 20 may be an antenna installed in a structure such as a building, and a signal processing apparatus connected to the antenna. The base station 20 may be the structure or mobile object itself. The term "on the ground" has a broad meaning, and includes not only "on land" ("on the ground" in a narrow sense) but also "under the ground", "on water", and "in water". The base station 20 is not limited to a ground base station. When the wireless communication system 1 is a satellite communication system, the base station 20 may be an aircraft station. As viewed from a satellite station, an aircraft station situated on the earth is a ground station.

The base station 20 is not limited to a ground station. The base station 20 may be a non-ground base station (a non-ground station) that can float in the air or in space. The base station 20 may be an aircraft station or a satellite station.

The satellite station is a satellite station that can float outside of the atmosphere of the earth. The satellite station may be an apparatus that is included in a space mobile object such as an artificial satellite, or may be the space mobile object itself. The space mobile object is a mobile object that moves outside of the atmosphere of the earth. Examples of the space mobile object include artificial celestial objects such as an artificial satellite, a spacecraft, a space station, and a probe.

A satellite serving as a satellite station may be any of a low earth orbiting (LEO) satellite, a medium earth orbiting (MEO) satellite, a geostationary earth orbiting (GEO) satellite, and a highly elliptical orbiting (HEO) satellite. The satellite station may be an apparatus that is included in a low earth orbiting satellite, a medium earth orbiting satellite, a geostationary earth orbiting satellite, or a highly elliptical orbiting satellite.

The aircraft station is a wireless communication apparatus, such as an aircraft, that can float in the atmosphere of the earth. The aircraft station may be an apparatus that is included in, for example, an aircraft, or may be the aircraft itself. The concept of the aircraft includes not only heavy aircraft such as an airplane and a glider but also light aircraft such as a balloon and an airship. The concept of the aircraft includes not only heavy aircraft and light aircraft but also rotorcraft such as a helicopter and an autogyro. The aircraft station, or an aircraft that includes the aircraft station may be an unmanned aircraft such as a drone.

The concept of the unmanned aircraft also includes an unmanned aircraft system (UAS) and a tethered UAS. The concept of the unmanned aircraft includes a lighter-than-air (LTA) UAS and a heavier-than-air (HTA) UAS. The concept of the unmanned aircraft also includes a high-altitude UAS platform (HAP).

The coverage of the base station 20 may be as relatively large as a macrocell, or may be as relatively small as a picocell. The coverage of the base station 20 may be as extremely small as a femtocell. The base station 20 may include a beamforming function. For the base station 20, a cell or a service area may be formed for each beam.

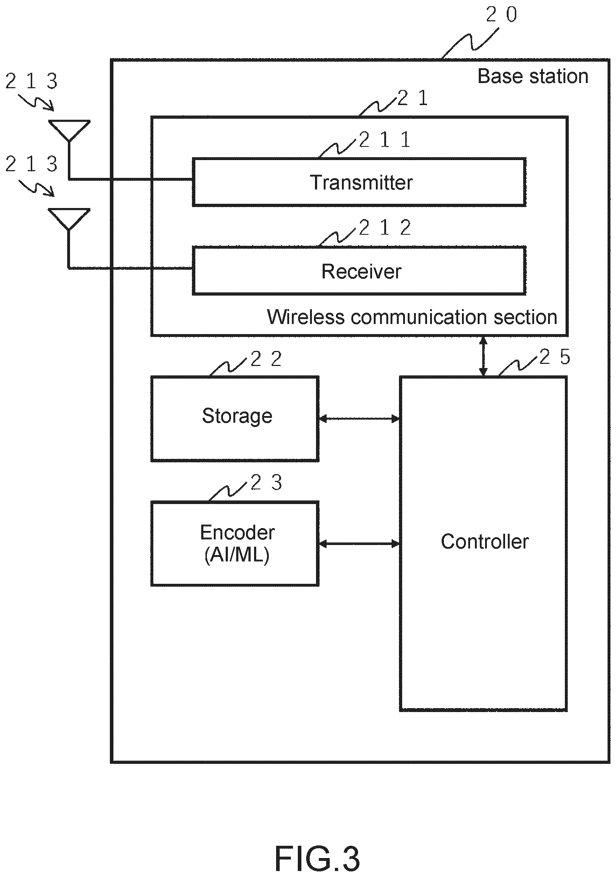

Fig. 3 illustrates a configuration of the base station 20 according to the first embodiment. The base station 20 includes a wireless communication section 21, a storage 22, a decoder 23, and a controller 25. Note that Fig. 3 illustrates a functional configuration, and a hardware configuration may be different from the configuration illustrated in Fig. 3. Further, functions of the base station 20 may be distributed to be provided to a plurality of physically separated configurations.

The wireless communication section 21 is a signal processor used to wirelessly communicate with another wireless communication apparatus (such as the relay station 30, the terminal apparatus 40, or another base station 20). The wireless communication section 21 is controlled by the controller 25. The wireless communication section 21 supports at least one radio access scheme. The wireless communication section 21 may support both the NR and the LTE. The wireless communication section 21 may support, for example, W-CDMA and cdma2000 in addition to the NR and the LTE. The wireless communication section 21 may support an automatic retransmission technology such as a hybrid automatic repeat request (HARQ).

The wireless communication section 21 includes a transmitter 211, a receiver 212, and an antenna 213. The wireless communication section 21 may include a plurality of transmitters 211, a plurality of receivers 212, and a plurality of antennas 213. When the wireless communication section 21 supports a plurality of radio access schemes, the respective components of the wireless communication section 21 may be individually configured for each radio access scheme. The transmitter 211 and the receiver 212 may be individually configured for each of the LTE and the NR. The antenna 213 may include a plurality of antenna elements such as a plurality of patch antennas. The wireless communication section 21 may include a beamforming function. The wireless communication section 21 may include a function of polarization beamforming that uses vertically polarized waves (V-polarized waves) and horizontally polarized waves (H-polarized waves).

The transmitter 211 performs processing of transmitting downlink control information and downlink data. For example, first, the transmitter 211 encodes downlink control information and downlink data that are input from the controller 24, using an encoding scheme such as block encoding, convolutional encoding, or turbo encoding. Encoding using a polar code or encoding using a low density parity check (LDPC) code may be performed as the encoding.

Next, the transmitter 211 modulates an encoded bit according to a specified modulation scheme such as BPSK, QPSK, 16QAM, 64QAM, or 256QAM. In this case, signal points on a constellation do not necessarily have to be equally spaced. In other words, the constellation may be a non-uniform constellation (NUC) .

Next, the transmitter 211 multiplexes a modulation symbol of each channel and a downlink reference signal, and provides the multiplexed modulation symbol and downlink reference signal to a specified resource element. Next, the transmitter 211 performs various signal processes on the multiplexed signal. For example, the transmitter 211 performs processes such as transformation into a frequency domain using fast Fourier transform, addition of a guard interval (cyclic prefix), generation of a baseband digital signal, conversion into an analog signal, quadrature modulation, up-conversion, removal of an extra frequency component, and power amplification. Finally, a signal generated by the transmitter 211 is transmitted through the antenna 213.

The receiver 212 processes an uplink signal received through the antenna 213. For example, first, the receiver 212 performs, on the uplink signal, downconversion, removal of an unnecessary frequency component, control of an amplification level, quadrature demodulation, conversion into a digital signal, removal of a guard interval (cyclic prefix), extraction of a frequency domain signal using fast Fourier transform, and the like.

Next, from the signal on which these processes have been performed, the receiver 212 separates an uplink channel such as a physical uplink shared channel (PUSCH) and a physical uplink control channel (PUCCH), and an uplink reference signal. Next, the receiver 212 demodulates a received signal using a modulation symbol of the uplink channel according to a modulation scheme such as binary phase shift keying (BPSK) or quadrature phase shift keying (QPSK). The modulation scheme may be 16 quadrature amplitude modulation (QAM), 64QAM, or 256QAM. In this case, signal points on a constellation do not necessarily have to be equally spaced. In other words, the constellation may be a non-uniform constellation.

Next, the receiver 212 performs decoding processing on a demodulated encoded bit of the uplink channel. Finally, decoded uplink data and uplink control information are output to the controller 24.

The antenna 213 is an antenna apparatus that performs conversion between current and radio waves. The antenna 213 may include a single antenna element, that is, for example, a single patch antenna. The antenna 213 may include a plurality of antenna elements, that is, for example, a plurality of patch antennas. When the antenna 213 includes a plurality of antenna elements, the wireless communication section 21 may include a beamforming function. The wireless communication section 21 may be configured to generate a directional beam by controlling the directivity of a radio signal using a plurality of antenna elements. The antenna 213 may be a dual-polarized antenna. When the antenna 213 is a dual-polarized antenna, the wireless communication section 21 may use vertically polarized waves (V-polarized waves) and horizontally polarized waves (H-polarized waves) upon transmitting a radio signal. The wireless communication section 21 may control the directivity of the radio signal transmitted using the vertically polarized waves and the horizontally polarized waves.

The storage 22 is a data readable/writable storage apparatus such as a DRAM, an SRAM, a flash memory, or a hard disk. The storage 22 serves as a storage device of the base station 20.

The decoder 23 includes a function of performing signal processing using an AI/ML model. The AI/ML model is a neural network model obtained by machine learning or deep learning. Examples of the neural network model may include a convolutional neural network (CNN) model, a recurrent neural network (RNN) model, and a long short-term memory (LSTM) model. The AL/ML model may be any of these models, or may be obtained by combining these models in series or in parallel.

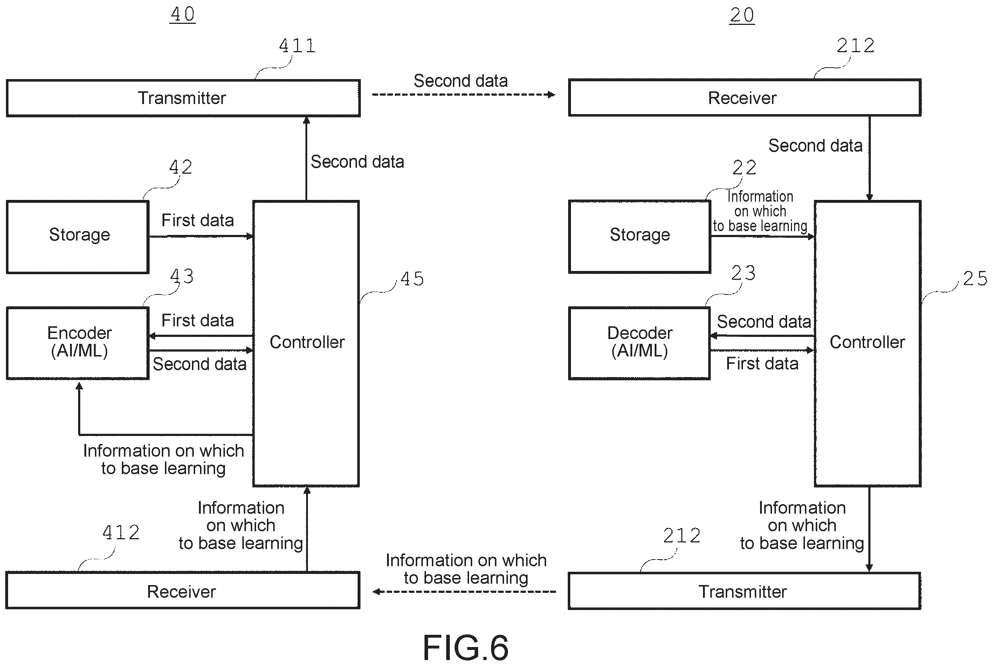

The decoder 23 restores and outputs first data by performing signal processing using an AI/ML model, where second data is used as input. The decoder 23 may be implemented by a processor such as a CPU or an MPU. The decoder 23 may be implemented by an integrated circuit such as an ASIC or an FPGA. The configuration of the decoder 23 will be described in further detail later with reference to Fig. 6.

The controller 25 is a controller that controls each component of the base station 20. The controller 25 may be implemented by a processor such as a CPU or an MPU. In particular, the controller 25 may be implemented by a processor executing, using a RAM or the like as a working region, various programs stored in a storage apparatus situated inside of the base station 20. The controller 25 may be implemented by an integrated circuit such as an ASIC or an FPGA. Any of the CPU, the MPU, the ASIC, and the FPGA can be considered a controller. The controller 25 may be implemented by a graphics processing unit (GPU) in addition to, or instead of the CPU.

Note that, in some embodiments, the base station 20 may include a set of a plurality of physical or logical apparatuses. For example, the base station 20 according to the present embodiment may include a plurality of different kinds of apparatuses such as a baseband unit (BBU) and a radio unit (RU). The base station 20 may be understood as a set of the plurality of different kinds of apparatuses. Further, the base station 20 may be one of the BBU and the RU or both of them. The BBU and the RU may be connected to each other through a specified interface such as an enhanced common public radio interface (eCPRI).

The RU may alternatively be phrased as a remote radio unit (RRU) or a radio dot (RD). The RU may correspond to a gNB distributed unit (gNB-DU) described later. The BBU may correspond to a gNB central unit (gNB-CU) described later. The RU may be an apparatus that is formed integrally with an antenna. The antenna of the base station 20, that is, for example, the antenna formed integrally with the RU may adopt an advanced antenna system, and may support MIMO such as FD-MIMO, or beamforming. The antenna of the base station 20 may include, for example, 64 transmission antenna ports and 64 reception antenna ports.

An antenna that is included in the RU may be an antenna panel including at least one antenna element, and the RU may include at least one antenna panel. The RU may include two types of antenna panels that are an antenna panel of horizontally polarized waves and an antenna panel of vertically polarized waves. The RU may include two types of antenna panels that are an antenna panel of right-handed circularly polarized waves and an antenna panel of left-handed circularly polarized waves. The RU may form an independent beam for each antenna panel and control the formed beam.

The base stations 20 may be connected to each other. At least one base station 20 may be included in a radio access network (RAN). In this case, the base station 20 may be simply referred to as a RAN, a RAN node, an access network (AN), or an AN node. A RAN in the LTE may be called an enhanced universal terrestrial RAN (EUTRAN). A RAN in the NR may be called as an NGRAN. A RAN in the W-CDMA (UMTS) may be called a UTRAN.

The base station 20 of the LTE may be referred to as an evolved Node B (eNodeB) or an eNB. In this case, the EUTRAN includes at least one eNodeB (eNB). The base station 20 of the NR may be referred to as a gNodeB or a gNB. In this case, the NGRAN includes at least one gNB. The EUTRAN may include a gNB (en-gNB) connected to a core network in an LTE communication system (EPS) (EPC). The NGRAN may include an ng-eNB connected to a core network 5GC in a 5G communication system (5GS).

When the base station 20 is, for example, an eNB or a gNB, the base station 20 may be referred to as a 3GPP access. When the base station 20 is a wireless access point (an access point), the base station 20 may be referred to as a non-3GPP access. The base station 20 may be an optical extension apparatus called a remote radio head (RRH). When the base station 20 is a gNB, the base station 20 may be obtained by combining the gNB-CU and gNB-DU described above, or may be one of the gNB-CU and the gNB-DU.

In order to communicate with UE, the gNB-CU hosts a plurality of higher layers (such as RRC, SDAP, and PDCP) from among access strata. The gNB-DU hosts a plurality of lower layers (such as RLC, MAC, and PHY) from among the access strata. From among messages / information that will be described later, RRC signaling (a quasistatic report) may be generated by the gNB-CU, whereas a MAC CE and DCI (dynamic reports) may be generated by the gNB-DU. Alternatively, from among RRC configurations (quasistatic reports), a portion of the configurations such as IE: cellGroupConfig may be generated by the gNB-DU, whereas the remaining configurations may be generated by the gNB-CU. These configurations may be transmitted and received through an F1 interface described later.

The base station 20 may be capable of communicating with another base station. When a plurality of base stations 20 is obtained by combining eNBs or by combining an eNB and an en-gNB, the base stations 20 of the plurality of base stations 20 may be connected to each other using an X2 interface. When the plurality of base stations 20 is obtained by combining gNBs or by combining a gn-eNB and a gNB, the base stations 20 of the plurality of base stations 20 may be connected to each other using an Xn interface. When the plurality of base stations is obtained by combining a gNB-CU and a gNB-DU, the base stations 20 of the plurality of base stations 20 may be connected to each other by the F1 interface described above. A message / information (such as RRC signaling, a MAC control element (MAC CE), or DCI) described later may be transmitted between a plurality of base stations 20 through, for example, the X2 interface, the Xn interface, or the F1 interface.

A cell provided by the base station 20 may be called a serving cell. The concept of the serving cell includes a primary cell (PCell) and a secondary cell (SCell). When dual connectivity is provided to the terminal apparatus 40, the PCell provided by a master node (MN), and zero SCells or at least one SCell may be called a master cell group. Examples of the dual connectivity include EUTRA-EUTRA dual connectivity, EUTRA-NR dual connectivity (ENDC), EUTRA-NR dual connectivity with 5GC, NR-EUTRA dual connectivity (NEDC), and NR-NR dual connectivity.

The serving cell may include a primary secondary cell or a primary SCG cell (PSCell). When the dual connectivity is provided to the terminal apparatus 40, a PSCell provided by a secondary node (SN), and zero SCells or at least one SCell may be called a secondary cell group (SCG). Unless a special setting (such as PUCCH on SCell) has been performed, a physical uplink control channel (PUCCH) is transmitted in the PCell and the PSCell, but is not transmitted in the SCell. A radio link failure is detected in the PCell and the PSCell, but is not detected in the SCell (does not have to be detected). As described above, the PCell and the PSCell play a special role among the serving cells, and thus are also called special cells (SpCells).

A single downlink component carrier and a single uplink component carrier may be associated with a single cell. A system bandwidth that corresponds to a single cell may be divided into a plurality of bandwidth parts (BWPs). In this case, at least one BWP may be set for the terminal apparatus 40, and the terminal apparatus 40 may use one BWP as an active BWP. Radio resources such as a frequency band, the numerology (subcarrier spacing), and a slot format (a slot configuration) that can be used by the terminal apparatus 40 may be different for respective cells, for respective component carriers, or for respective BWPs.

### (Configuration of Relay Station)

The relay station 30 is a wireless communication apparatus that serves as a relay device for the base station 20. The relay station 30 is a type of base station. The relay station 30 is a type of information processing apparatus. The relay station can alternatively be phrased as a relay base station.

The relay station 30 may be capable of performing the NOMA communication with the terminal apparatus 40. The relay station 30 relays communication between the base station 20 and the terminal apparatus 40. The relay station 30 may be capable of wirelessly communicating with another relay station 30 and the base station 20. The relay station 30 may be a ground station apparatus or a non-ground station apparatus. The relay station 30 forms a radio access network RAN together with the base station 20.

The relay station 30 may be a fixed apparatus, a movable apparatus, or a floatable apparatus. The size of the coverage of the relay station 30 is not limited to a specific size. A cell covered by the relay station 30 may be a macrocell, a microcell, or a small cell.

The relay station 30 may be included in any apparatus in which the relay function of the relay station 30 is satisfied. The relay station 30 may be included in a terminal apparatus such as a smartphone, may be included in, for example, an automobile, a train, or a human-powered vehicle, may be included in, for example, a balloon, an airplane, or a drone, or may be included in a home appliance such as a television, a game machine, an air conditioner, a refrigerator, or a lighting fixture.

The relay station 30 may have a configuration similar to the configuration of the base station 20 described above. As in the case of the base station 20 described above, the relay station 30 may be an apparatus installed in a mobile object, or may be the mobile object itself. As described above, the mobile object may be a mobile terminal such as a smartphone or a mobile phone. The mobile object may be a mobile object that moves on land (on the ground in a narrow sense), or a mobile object that moves under the ground. The mobile object may be a mobile object that moves on water, or a mobile object that moves in water. The mobile object may be a mobile object that moves in the atmosphere of the earth, or a mobile object that moves outside of the atmosphere of the earth. The relay station 30 may be a ground station apparatus or a non-ground station apparatus. The relay station 30 may be, for example, an aircraft station or a satellite station.

As in the case of the base station 20, the coverage of the relay station 30 may be as large as a macrocell, or may be as small as a picocell. The coverage of the relay station 30 may be as extremely small as a femtocell. The relay station 30 may include a beamforming function. For the relay station 30, a cell or a service area may be formed for each beam.

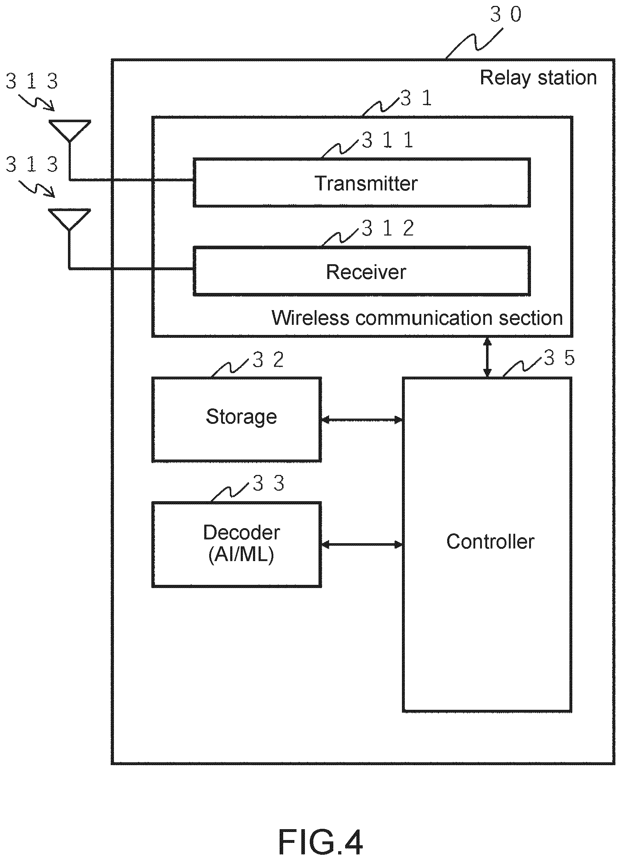

Fig. 4 illustrates a configuration of the relay station 30 according to the first embodiment. The relay station 30 includes a wireless communication section 31, a storage 32, a decoder 33, and a controller 35. Note that Fig. 4 illustrates a functional configuration, and a hardware configuration may be different from the configuration illustrated in Fig. 4. Further, functions of the relay station 30 may be distributed to be provided to a plurality of physically separated configurations.

The wireless communication section 31 is a signal processor used to wirelessly communicate with another wireless communication apparatus (such as the base station 20, the terminal apparatus 40, or another relay station 30). The wireless communication section 31 supports at least one radio access scheme. The wireless communication section 31 may support both the NR and the LTE. The wireless communication section 31 may support W-CDMA and cdma3000 in addition to the NR and the LTE.

The wireless communication section 31 includes a transmitter 311, a receiver 312, and an antenna 313. The wireless communication section 31 may include a plurality of transmitters 311, a plurality of receivers 312, and a plurality of antennas 313. When the wireless communication section 31 supports a plurality of radio access schemes, the respective components of the wireless communication section 31 may be individually configured for each radio access scheme. The transmitter 311 and the receiver 312 may be individually configured for each of the LTE and the NR. The transmitter 311, the receiver 312, and the antenna 313 respectively have configurations similar to the respective configurations of the transmitter 211, the receiver 212, and the antenna 213 of the base station 20 described above. As in the case of the wireless communication section 21 of the base station 20, the wireless communication section 31 may include a beamforming function.

The storage 32 is a data readable/writable storage apparatus such as a DRAM, an SRAM, a flash memory, or a hard disk. The storage 32 serves as a storage device of the relay station 30.

The decoder 33 includes a function of performing signal processing using an AI/ML model. The AI/ML model is a neural network model obtained by machine learning or deep learning. Examples of the neural network model may include a convolutional neural network (CNN) model, a recurrent neural network (RNN) model, and a long short-term memory (LSTM) model. The AL/ML model may be any of these models, or may be obtained by combining these models in series or in parallel.

The decoder 33 restores and outputs first data by performing signal processing using an AI/ML model that uses second data as input, where the second data is received from the terminal apparatus 40 described later. The decoder 33 may have a configuration and a function that are respectively similar to the configuration and the function of the decoder 23 of the base station 20 described above.

The controller 34 is a controller that controls each component of the relay station 30. The controller 34 may be implemented by a processor such as a CPU or an MPU. In particular, the controller 34 may be implemented by a processor executing, using a RAM or the like as a working region, various programs stored in a storage apparatus situated inside of the relay station 30. The controller 34 may be implemented by an integrated circuit such as an ASIC or an FPGA. Any of the CPU, the MPU, the ASIC, and the FPGA can be considered a controller. The controller 34 may be implemented by a GPU in addition to, or instead of the CPU.

Note that the relay station 30 may be an IAB relay node. The relay station 30 operates as an IAB mobile termination (IAB-MT) for an IAB donor node to which a backhaul is provided, and operates as an IAB distributed unit (IAB-DU) for the terminal apparatus 40 to which access is provided. The IAB donor node may be, for example, the base station 20, and operates as an IAB central unit (IAB-CU).

### (Configuration of Terminal Apparatus)

The terminal apparatus 40 is a wireless communication apparatus that wirelessly communicates with another wireless communication apparatus (such as the base station 20, the relay station 30, or another terminal apparatus 40). Examples of the terminal apparatus 40 may include a mobile phone, a smart device (a smartphone or a tablet), a personal digital assistant (PDA), and a personal computer. The terminal apparatus 40 may be an apparatus such as a camera for business use that includes a communication function. The terminal apparatus 40 may be, for example, a motorcycle or mobile relay vehicle that includes a communication apparatus such as a field pickup unit (FPU). The terminal apparatus 40 may be, for example, a machine-to-machine (M2M) device or an Internet-of-Things (IoT) device.

The terminal apparatus 40 may be capable of performing the NOMA communication with the base station 20. The terminal apparatus 40 may be capable of using the automatic retransmission technology such as HARQ upon communicating with the base station 20. The terminal apparatus 40 may be capable of performing sidelink communication with another terminal apparatus 40. The terminal apparatus 40 may be capable of using the automatic retransmission technology such as HARQ upon performing the sidelink communication. The terminal apparatus 40 may be capable of performing the NOMA communication upon the sidelink communication with another terminal apparatus 40. The terminal apparatus 40 may be capable of performing LPWA communication with another wireless communication apparatus such as the base station 20. Wireless communication used by the terminal apparatus 40 may be wireless communication using millimeter waves. The wireless communication used by the terminal apparatus 40 may be wireless communication using radio waves that includes the sidelink communication, or wireless communication using infrared light or visible light, that is, optical wireless communication.

The terminal apparatus 40 may be a movable wireless communication apparatus, that is, a mobile object apparatus. The terminal apparatus 40 may be a wireless communication apparatus installed in a mobile object, or may be the mobile object itself. The terminal apparatus 40 may be a vehicle, such as an automobile, a bus, a truck, or a motorcycle, that moves on a road, or may be a wireless communication apparatus that is included in the vehicle. The mobile object may be a mobile terminal, or a mobile object that moves on land (on the ground in a narrow sense), under the ground, on water, or in water. The mobile object may be a mobile object, such as a drone or a helicopter, that moves in the atmosphere of the earth, or may be a mobile object, such as an artificial satellite, that moves outside of the atmosphere of the earth.

The terminal apparatus 40 may be capable of performing communication by being simultaneously connected to a plurality of base stations 20 or a plurality of cells. When a single base station 20 supports a communication area through a plurality of cells (such as pCell and sCell), the base station 20 and the terminal apparatus 40 can communicate with each other by bringing the plurality of cells together using, for example, carrier aggregation (CA), dual connectivity (DC), or multi-connectivity (MC). Alternatively, the terminal apparatus 40 can also communicate with the base stations 20 different from each other through cells of the different base stations 20 using coordinated multi-point transmission and reception (CoMP).

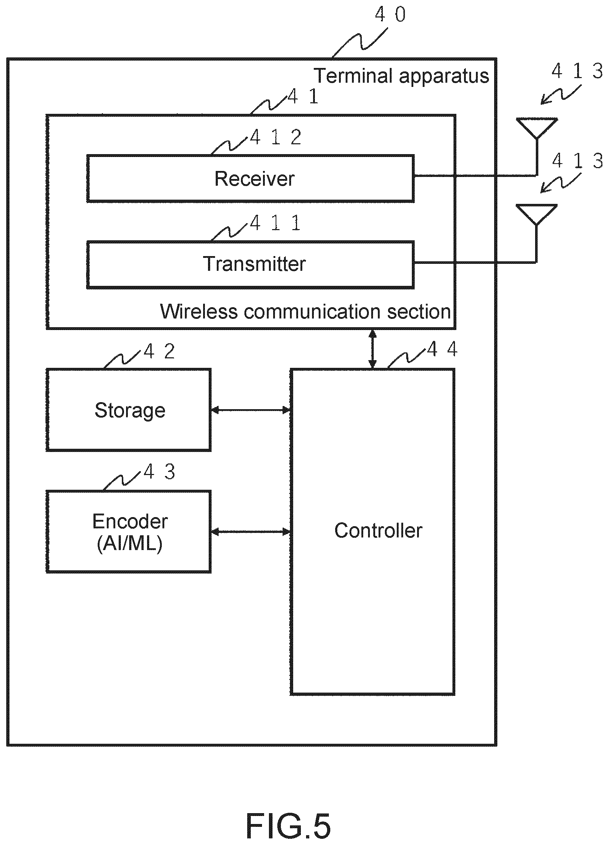

Fig. 5 illustrates a configuration of the terminal apparatus 40 according to the first embodiment. The terminal apparatus 40 includes a wireless communication section 41, a storage 42, an encoder 43, and a controller 45. Note that Fig. 5 illustrates a functional configuration, and a hardware configuration may be different from the configuration illustrated in Fig. 5. Further, functions of the terminal apparatus 40 may be distributed to be provided to a plurality of physically separated configurations.

The wireless communication section 41 is a signal processor used to wirelessly communicate with another wireless communication apparatus (such as the base station 20, the relay station 30, or another terminal apparatus 40). The wireless communication section 41 is controlled by the controller 45. The wireless communication section 41 includes a transmitter 411, a receiver 412, and an antenna 413. The wireless communication section 41, the transmitter 411, the receiver 412, and the antenna 413 respectively have configurations similar to the respective configurations of the wireless communication section 21, the transmitter 211, the receiver 212, and the antenna 213 of the base station 20. As in the case of the wireless communication section 21 of the base station 20, the wireless communication section 41 may include a beamforming function.

The storage 42 is a data readable/writable storage apparatus such as a DRAM, an SRAM, a flash memory, or a hard disk. The storage 42 serves as a storage device of the terminal apparatus 40.

The encoder 43 includes a function of performing signal processing using an AI/ML model. The AI/ML model is a neural network model obtained by machine learning or deep learning. Examples of the neural network model may include a convolutional neural network (CNN) model, a recurrent neural network (RNN) model, and a long short-term memory (LSTM) model. The AL/ML model may be any of these models, or may be obtained by combining these models in series or in parallel.

The encoder 43 generates and outputs second data by performing signal processing using an AI/ML model, where given first data is used as input. The encoder 43 may be implemented by a processor such as a CPU or an MPU. The encoder 43 may be implemented by an integrated circuit such as an ASIC or an FPGA. The configuration of the encoder 43 will be described in further detail later with reference to Fig. 6.

The controller 45 is a controller that controls each component of the terminal apparatus 40. The controller 45 may be implemented by a processor such as a CPU or an MPU. In particular, the controller 45 may be implemented by a processor executing, using a RAM or the like as a working region, various programs stored in a storage apparatus situated inside of the terminal apparatus 40. The controller 45 may be implemented by an integrated circuit such as an ASIC or an FPGA. Any of the CPU, the MPU, the ASIC, and the FPGA can be considered a controller. The controller 45 may be implemented by a GPU in addition to, or instead of the CPU.

### (Configurations of Terminal Apparatus and Base Station)

The technology according to the present disclosure is described below on the basis of an example in which AI/ML-model-based signal processing is performed between the terminal apparatus 40 including the encoder 43 serving as a signal processor including an AI/ML model, and the base station 20 including the decoder 23 serving as a signal processor including an AI/ML model. However, the terminal apparatus 40 and the base station 20 may be replaced with each other. In other words, the technology according to the present disclosure can be applied when signal processing is performed between any two communication apparatuses including AI/ML models.

In the present disclosure, the terms "encode" and "decode" have concepts respectively including any signal processes in a pair, and each of the terms may represent not only signal processing related to compression and decompression of data but also other signal processing. In the present disclosure, the terms "encode" and "decode" may be referred to by terms other than "encode" and "decode". The technology according to the present disclosure is described below using the terms "encode", "encoder, "decode", and "decoder". However, the technology according to the present disclosure may be described using terms other than the terms described above.

As illustrated in Fig. 6, the wireless communication system 1 according to the first embodiment includes the terminal apparatus 40 the base station 20.

The terminal apparatus 40 includes the encoder 43 serving as a signal processor including an AI/ML model. The encoder 43 encodes given first data using the AI/ML model, where the first data is used as input. Accordingly, the encoder 43 generates second data.

The second data generated by the encoder 43 is transmitted by the transmitter 411 to the base station 20 via an uplink, and received by the receiver 212 of the base station 20.

The base station 20 includes the decoder 23 serving as a signal processor including an AI/ML model. The decoder 23 decodes, using the AI/ML model, the second data received from the terminal apparatus 40, where the second data is used as input. Accordingly, the decoder 23 restores the first data.

### (Operation of Base Station)

In the first embodiment, the base station 20 transmits information on which to base learning of an AI/ML model to the terminal apparatus 40 before signal processing that corresponds to the above-described encoding based on an AI/ML model, and signal processing that corresponds to the above-described decoding based on an AI/ML model are performed. The terminal apparatus 40 sets an AI/ML model included in the encoder 43 of the terminal apparatus 40, on the basis of information on which to base learning of an AI/ML model, the information being received from the base station 20. Thereafter, the terminal apparatus 40 trains the AI/ML model included in the encoder 43.

For example, the information on which to base learning of an AI/ML model may be included in system information, radio-resource-control (RRC) signaling, a MAC control element (MAC CE), or downlink control information (DCI), and the system information, the RRC signaling, the MAC CE, or the DCI may be transmitted. Note that, in the following description, the term "transmission" has a concept including "report" or "configuration".

Examples of the information on which to base learning of an AI/ML model include pieces of information regarding the type of AI/ML model (such as a CNN model, an RNN model, and an LSTM model), the number of input nodes (the number of neurons of an input layer), the number of output nodes (the number of neurons of an output layer), a layer configuration (such as the number of intermediate layers, the number of neurons of each intermediate layer, and a connection relationship), a value of weighting coefficient (a value of weighting coefficient between neurons), a layer in which learning is performed (such as only performing learning in a fully-connected layer in a final stage), and learning data (such as training data, validation data, and test data).

The information on which to base learning may also alternatively be phrased as, for example, an "initial value of learning". When information on which to base learning of an AI/ML model is defined in advance, this makes it possible to reduce a difference in performance between models that is caused due to learning subsequently performed in respective terminal apparatuses. Thus, the base station 20 can perform signal processing together with each terminal apparatus without being conscious of a difference between models of the respective terminal apparatuses.

When, for example, the number of input nodes of an AI/ML model and the number of output nodes of the AI/ML model are determined in advance as pieces of information on which to base learning of an AI/ML model, this makes it possible to unify the numbers of input nodes of AI/ML models of respective terminal apparatuses and the numbers of output nodes of the AI/ML models. This results in preventing AI/ML models of respective terminal apparatuses from having different numbers of input nodes and different numbers of output nodes. Thus, the base station 20 can transmit data used for signal processing to and receive the data from each terminal apparatus without being conscious of a difference between the respective terminal apparatuses in the numbers of input nodes and output nodes of an AI/ML model.

When, for example, a value of weighting coefficient (an initial value) for an AI/ML model is determined in advance as information on which to base learning of an AI/ML model, this makes it possible to reduce a difference in performance between models that is caused due to learning subsequently performed in respective terminal apparatuses. This results in being able to secure a minimum performance for a terminal apparatus having a low learning capacity.

A portion of information on which to base learning of an AI/ML model may be determined as specifications in advance and stored in the storage 42 of the terminal apparatus 40. For example, the type of AI/ML model, the number of input nodes, the number of output nodes, and a layer configuration may be determined as specifications in advance and stored in the storage 42 of the terminal apparatus 40, and information on which to base learning that is transmitted from the base station 20 to the terminal apparatus 40 may only include, for example, a value of weighting coefficient and learning data.

The information on which to base learning of an AI/ML model may be determined on the basis of a frequency band used by the terminal apparatus 40. Examples of the frequency band include an uplink band, a downlink band, a sidelink band, a supplementary uplink band, a component carrier, a bandwidth part (BWP), a resource block, a subcarrier, a band of 6 GHz or less in FR1, a band of from 24 GHz to 54.26 GHz in FR2, a millimeter-wave band, and a tera-wave band.

When, for example, the terminal apparatus 40 and the base station 20 communicate with each other using a frequency band A, the base station 20 may transmit information A on which to base learning to the terminal apparatus 40, the information A being determined to be adapted for the frequency band A. Further, when, for example, the terminal apparatus 40 and the base station 20 communicate with each other using a frequency band B, the base station 20 may transmit information B on which to base learning to the terminal apparatus 40, the information B being determined to be adapted for the frequency band B.

The information on which to base learning of an AI/ML model may be determined on the basis of a cell in which the terminal apparatus 40 is situated. When, for example, the terminal apparatus 40 is situated in a cell A, the base station 20 may transmit information A on which to base learning to the terminal apparatus 40, the information A being determined to be adapted for communication in the cell A. Further, when, for example, the terminal apparatus 40 is situated in a cell B, the base station 20 may transmit information B on which to base learning to the terminal apparatus 40, the information B being determined to be adapted for communication in the cell B.

The information on which to base learning of an AI/ML model may be determined on the basis of a beam used by the terminal apparatus 40. When, for example, the terminal apparatus 40 uses a beam A, the base station 20 may transmit information A on which to base learning to the terminal apparatus 40, the information A being determined to be adapted for the beam A. Further, when, for example, the terminal apparatus 40 uses a beam B, the base station 20 may transmit information B on which to base learning to the terminal apparatus 40, the information B being determined to be adapted for the beam B.

The information on which to base learning of an AI/ML model may be determined on the basis of a synchronization signal block (SSB) used by the terminal apparatus 40. When, for example, the base station 20 and the terminal apparatus 40 communicate with each other using an SSB_A, the base station 20 may transmit information A on which to base learning to the terminal apparatus 40, the information A being determined to be adapted for the SSB_A. Further, when, for example, the terminal apparatus 40 and the base station 20 communicate with each other using an SSB_B, the base station 20 may transmit information B on which to base learning to the terminal apparatus 40, the information B being determined to be adapted for the SSB_B.

The information on which to base learning of an AI/ML model may be determined on the basis of a polarized wave used by the terminal apparatus 40. When, for example, the base station 20 and the terminal apparatus 40 communicate with each other using a right-handed circularly polarized wave, the base station 20 may transmit information R on which to base learning to the terminal apparatus 40, the information R being determined to be adapted for the right-handed circularly polarized wave. Further, when, for example, the terminal apparatus 40 and the base station 20 communicate with each other using a left-handed circularly polarized wave, the base station 20 may transmit information L on which to base learning to the terminal apparatus 40, the information L being determined to be adapted for the left-handed circularly polarized wave.

The information on which to base learning of an AI/ML model may be determined on the basis of a network slice identifier (single network slice selection assistance information (S-NSSAI)) used by the terminal apparatus 40. When, for example, the base station 20 and the terminal apparatus 40 communicate with each other using a network slice A, the base station 20 may transmit information A on which to base learning to the terminal apparatus 40, the information A being determined to be adapted for the network slice A. Further, when, for example, the terminal apparatus 40 and the base station 20 communicate with each other using a network slice B, the base station 20 may transmit information B on which to base learning to the terminal apparatus 40, the information B being determined to be adapted for the network slice B.

In the case described above, the base station 20 may perform setting, for each network slice, on whether AI/ML-model-based signal processing is to be performed between the base station 20 and the terminal apparatus 40. When, for example, the base station 20 and the terminal apparatus 40 communicate with each other using a network slice C, the base station 20 may perform setting such that AI/ML-model-based signal processing is performed. Further, when, for example, the base station 20 and the terminal apparatus 40 communicate with each other using a network slice D, the base station 20 may perform setting such that the AI/ML-model-based signal processing is not performed.

The base station 20 may transmit information on which to base learning of an AI/ML model according to a radio-resource-control state (an RRC state) of the terminal apparatus 40. When, for example, the terminal apparatus 40 is in an RRC idle state or in an RRC inactive state, the base station 20 does not necessarily have to transmit the information on which to base learning of an AI/ML model to the terminal apparatus 40. In this case, the terminal apparatus 40 may individually set and train an AI/ML model included in the encoder 43 of the terminal apparatus 40, depending on the implementation of the terminal apparatus 40.

The base station 20 may transmit the information on which to base learning of an AI/ML model to the terminal apparatus 40 at the timing of updating a tracking area (TA), a registration area (RA), or a RAN-based notification area (RNA).

When, for example, the terminal apparatus 40 is in the RRC idle state or in the RRC inactive state, the base station 20 may include, in system information, information on which to base learning of an AI/ML model, and may transmit the system information to the terminal apparatus 40. In this case, the terminal apparatus 40 may set and train an AI/ML model included in the encoder 43 of the terminal apparatus 40, on the basis of the received information on which to base learning.

When, for example, the terminal apparatus 40 is in an RRC connected state, the base station 20 may include, in RRC signaling, a MAC CE, DCI, or the like, information on which to base learning of an AI/ML model, and may transmit the RRC signaling, the MAC CE, the DCI, or the like to the terminal apparatus 40. In this case, the terminal apparatus 40 may set and train an AI/ML model included in the encoder 43 of the terminal apparatus 40, on the basis of the received information on which to base learning.

The information on which to base learning of an AI/ML model may only include a single piece of information on which to base learning, or may include a plurality of pieces of information on which to base learning.

When, for example, information on which to base learning of an AI/ML model that is received from the base station 20 only includes a single piece of information on which to base learning, the terminal apparatus 40 may set and train an AI/ML model included in the encoder 43 of the terminal apparatus 40, on the basis of the single piece of information on which to base learning.

When, for example, information on which to base learning of an AI/ML model that is received from the base station 20 includes a plurality of pieces of information on which to base learning, the terminal apparatus 40 may select one of the plurality of pieces of information on which to base learning, and then the terminal apparatus 40 may set and train an AI/ML model included in the encoder 43 of the terminal apparatus 40.

When information on which to base learning of an AI/ML model is included in system information transmitted from the base station 20 to each terminal apparatus, the information on which to base learning of an AI/ML model may be shared by cells. Only when each terminal apparatus has the capability of performing AI/ML-model-based signal processing, the terminal apparatus may acquire the information on which to base learning of an AI/ML model, the information being included in the system information.

For example, it is assumed that system information used for an AI/ML model is defined. The terminal apparatus 40 refers to scheduling information regarding other system information, the scheduling information being included in, for example, a block 1 of received system information. When the system information used for an AI/ML model is scheduled, the terminal apparatus 40 may acquire information on which to base learning of an AI/ML model that is included in the system information used for an AI/ML model.

The information on which to base learning of an AI/ML model may include information regarding whether additional learning is allowed to be performed. When the information regarding whether additional learning is allowed to be performed is set to "unallowed", the terminal apparatus 40 is not allowed to additionally train an AI/ML model included in the encoder 43 of the terminal apparatus 40 after the AI/ML model is set on the basis of the information on which to base learning of an AI/ML model, the information on which to base learning being received from the base station 20.

Alternatively, separately from the information on which to base learning of an AI/ML model, the base station 20 may transmit, to the terminal apparatus 40, the information regarding whether additional learning is allowed to be performed. When the information regarding whether additional learning is allowed to be performed is set to "unallowed", the terminal apparatus 40 is not allowed to additionally train an AI/ML model included in the encoder 43 of the terminal apparatus 40 after the AI/ML model is set on the basis of the information on which to base learning of an AI/ML model, the information on which to base learning being received from the base station 20.

### (Operation of Terminal Apparatus)

In the first embodiment, after the terminal apparatus 40 sets and trains an AI/ML model included in the encoder 43 of the terminal apparatus 40, on the basis of information on which to base learning of an AI/ML model, the information being received from the base station 20, the terminal apparatus 40 may feed back information regarding the AI/ML model having performed learning (such as the type of AI/ML model, the number of input nodes, the number of output nodes, a layer configuration, and a value of weighting coefficient) to the base station 20.

The base station 20 may transmit, to the terminal apparatus 40, information (such as the number of input nodes, the number of output nodes, a layer configuration, and a value of weighting coefficient) that is used for additional learning of the AI/ML model, on the basis of the information regarding the AI/ML model having performed learning, the information being fed back by the terminal apparatus 40. The terminal apparatus 40 may additionally train the AI/ML model included in encoder 43 of the terminal apparatus 40, on the basis of the information used for additional learning of the AI/ML model, the information being received from the base station 20.

When the AI/ML model included in encoder 43 of the terminal apparatus 40 has already performed learning, the terminal apparatus 40 may transmit information regarding an AI/ML model having performed learning to the base station 20 before receiving, from the base station 20, information on which to base learning of an AI/ML model, where the information regarding an AI/ML model having performed learning is similar to the above-described information regarding the AI/ML model having performed learning.

When, for example, the terminal apparatus 40 performs AI/ML-model-based signal processing together with a plurality of base stations, it is necessary for the terminal apparatus 40 to separately train AI/ML models corresponding to the respective base stations. This results in the terminal apparatus 40 being very heavily loaded.

When an AI/ML model included in the encoder 43 of the terminal apparatus 40 has already performed learning, the terminal apparatus 40 may transmit information regarding its own AI/ML model having performed learning (such as the type of AI/ML model, the number of input nodes, the number of output nodes, a layer configuration, and a value of weighting coefficient) to the base station 20 to which the terminal apparatus 40 is newly connected, in order to reduce the load described above.

When the base station 20 receives, from the terminal apparatus 40, the information regarding the AI/ML model having performed learning, the base station 20 may determine information on which to base learning of an AI/ML model (such as the number of input nodes, the number of output nodes, a layer configuration, and a value of weighting coefficient), on the basis of the information regarding the AI/ML model having performed learning, and may transmit the determined information to the terminal apparatus 40.

As capability information regarding the capability of the terminal apparatus 40, the terminal apparatus 40 may transmit, to the base station 20, the type of AI/ML model supported by the terminal apparatus 40, the number of input nodes, the number of output nodes, a layer configuration, and the like. Alternatively, as capability information regarding the capability of the terminal apparatus 40, the terminal apparatus 40 may transmit information regarding its own AI/ML model having performed learning to the base station 20.

The base station 20 may make in advance a list of AI/ML models supported by the base station 20, and may transmit the list to the terminal apparatus 40 as static information such as the specifications, or may include the list in system information to transmit the system information to the terminal apparatus 40. The terminal apparatus 40 may select, from the list, an AI/ML model that can be supported by the terminal apparatus 40, and may include the selected AI/ML model in capability information regarding the capability of the terminal apparatus 40 to transmit the capability information to the base station 20.

For example, as capability information regarding the capability of the terminal apparatus 40, the terminal apparatus 40 may transmit, to the base station 20, the type of AI/ML model supported by the terminal apparatus 40, the number of input nodes, the number of output nodes, layer configuration, and the like. When the base station 20 receives the capability information from the terminal apparatus 40, the base station 20 may determine information on which to base learning of an AI/ML model (such as the number of input nodes, the number of output nodes, a layer configuration, and a value of weighting coefficient), on the basis of the capability information, and may transmit the determined information to the terminal apparatus 40.

In this case, when the terminal apparatus 40 has already caused the AI/ML model to perform learning together with another base station, the terminal apparatus 40 may transmit limited capability information such as the number of input nodes, the number of output nodes, and a layer configuration with respect to the AI/ML model having performed learning. Alternatively, the terminal apparatus 40 may transmit information regarding the AI/ML model having already performed learning to the base station 20 separately from the capability information.

In this case, as capability information regarding the capability of the terminal apparatus 40, the terminal apparatus 40 may transmit, to the base station 20, information regarding an AI/ML model that has performed learning or information regarding an AI/ML model that has not performed learning yet. The base station 20 may determine information on which to base learning of an AI/ML model, on the basis of the capability information, and may transmit the determined information to the terminal apparatus 40.

For example, as capability information regarding the capability of the terminal apparatus 40, the terminal apparatus 40 may transmit, to the base station 20, information regarding, for example, a supported AI/ML model, the capability of a CPU or a GPU, whether it is an apparatus that supports reduced capability (RedCap), whether it is an IoT terminal of, for example, NB-IoT or eMTC, and a supported bandwidth. The base station 20 may determine information on which to base learning of an AI/ML model, on the basis of the capability information, and may transmit the determined information to the terminal apparatus 40.

As capability information regarding the capability of the terminal apparatus 40, the terminal apparatus 40 may transmit information regarding, for example, the remaining processing capability and a maximum value of the processing capability to the base station 20. For example, such information may be included in capability information upon initial access, RRC signaling, a MAC CE, DCI, or the like, and the capability information, the RRC signaling, the MAC CE, the DCI, or the like may be transmitted. Further, such information may be transmitted when the base station 20 makes a request for the information, or may be transmitted regularly. When the information is transmitted regularly, the base station 20 may transmit, to the terminal apparatus 40, an instruction on, for example, how frequent the transmission is to be performed at which timing. Alternatively, the terminal apparatus 40 may perform transmission with, for example, predetermined frequency and a predetermined timing.

When the terminal apparatus 40 sets and trains a plurality of AI/ML models in the encoder 43 of the terminal apparatus 40 on the basis of information on which to base learning, the information being determined on the basis of a frequency band, the terminal apparatus 40 may select one of the plurality of AI/ML models according to a frequency band used by the terminal apparatus 40, and may use the selected AI/ML model.

When, for example, the terminal apparatus 40 and the base station 20 communicate with each other using the frequency band A, the terminal apparatus 40 may use an AI/ML model that is set and trained on the basis of information on which to base learning, the information being determined to be adapted for the frequency band A. Further, when, for example, the terminal apparatus 40 and the base station 20 communicate with each other using the frequency band B, the terminal apparatus 40 may use an AI/ML model that is set and trained on the basis of information on which to base learning, the information being determined to be adapted for the frequency band B.

When the terminal apparatus 40 sets and trains a plurality of AI/ML models in the encoder 43 of the terminal apparatus 40 on the basis of information on which to base learning, the information being determined on the basis of a cell, the terminal apparatus 40 may select one of the plurality of AI/ML models according to a cell in which the terminal apparatus 40 is situated, and may use the selected AI/ML model.

When, for example, the terminal apparatus 40 is situated in the cell A, the terminal apparatus 40 may use an AI/ML model that is set and trained on the basis of information on which to base learning, the information being determined to be adapted for the cell A. Further, when, for example, the terminal apparatus 40 is situated in the cell B, the terminal apparatus 40 may use an AI/ML model that is set and trained on the basis of information on which to base learning, the information being determined to be adapted for the cell B.

When the terminal apparatus 40 sets and trains a plurality of AI/ML models in the encoder 43 of the terminal apparatus 40 on the basis of information on which to base learning, the information being determined on the basis of a beam, the terminal apparatus 40 may select one of the plurality of AI/ML models according to a beam used by the terminal apparatus 40, and may use the selected AI/ML model.

When, for example, the terminal apparatus 40 and the base station 20 communicate with each other using the beam A, the terminal apparatus 40 may use an AI/ML model that is set and trained on the basis of information on which to base learning, the information being determined to be adapted for the beam A. Further, when, for example, the terminal apparatus 40 and the base station 20 communicate with each other using the beam B, the terminal apparatus 40 may use an AI/ML model that is set and trained on the basis of information on which to base learning, the information being determined to be adapted for the beam B.

When the terminal apparatus 40 sets and trains a plurality of AI/ML models in the encoder 43 of the terminal apparatus 40 on the basis of information on which to base learning, the information being determined on the basis of an SSB, the terminal apparatus 40 may select one of the plurality of AI/ML models according to an SSB used by the terminal apparatus 40, and may use the selected AI/ML model.

When, for example, the terminal apparatus 40 and the base station 20 communicate with each other using the SSB_A, the terminal apparatus 40 may use an AI/ML model that is set and trained on the basis of information on which to base learning, the information being determined to be adapted for the SSB_A. Further, when, for example, the terminal apparatus 40 and the base station 20 communicate with each other using the SSB_B, the terminal apparatus 40 may use an AI/ML model that is set and trained on the basis of information on which to base learning, the information being determined to be adapted for the SSB_B.

When the terminal apparatus 40 sets and trains a plurality of AI/ML models in the encoder 43 of the terminal apparatus 40 on the basis of information on which to base learning, the information being determined on the basis of a polarized wave, the terminal apparatus 40 may select one of the plurality of AI/ML models according to a polarized wave used by the terminal apparatus 40, and may use the selected AI/ML model.

When, for example, the terminal apparatus 40 and the base station 20 communicate with each other using a right-handed circularly polarized wave, the terminal apparatus 40 may use an AI/ML model that is set and trained on the basis of information on which to base learning, the information being determined to be adapted for the right-handed circularly polarized wave. Further, when, for example, the terminal apparatus 40 and the base station 20 communicate with each other using a left-handed circularly polarized wave, the terminal apparatus 40 may use an AI/ML model that is set and trained on the basis of information on which to base learning, the information being determined to be adapted for the left-handed circularly polarized wave.

The terminal apparatus 40 may select one of the plurality of AI/ML models according to an RRC state of the terminal apparatus 40, and may use the selected AI/ML model.

For example, when the terminal apparatus 40 is in the RRC idle state, the terminal apparatus 40 may use an AI/ML model that is individually set and trained depending on the implementation of the terminal apparatus 40. Alternatively, when the terminal apparatus 40 is in the RRC idle state, the terminal apparatus 40 may use an AI/ML model that is set on the basis of information on which to base learning, the information being included in system information received from the base station 20, or the terminal apparatus 40 may use an AI/ML model that is set and trained on the basis of the information on which to base learning.

For example, when the terminal apparatus 40 is in the RRC inactive state, the terminal apparatus 40 may use an AI/ML model that is set on the basis of information on which to base learning, the information being received during an RRC connection, or the terminal apparatus 40 may use an AI/ML model that is set and trained on the basis of the information on which to base learning. Alternatively, when the terminal apparatus 40 is in the RRC inactive state, the terminal apparatus 40 may use an AI/ML model that is set on the basis of information on which to base learning, the information being included in system information received from the base station 20, or the terminal apparatus 40 may use an AI/ML model that is set and trained on the basis of the information on which to base learning.

When, for example, the terminal apparatus 40 is in the RRC connected state, the terminal apparatus 40 may use an AI/ML model that is set on the basis of information on which to base learning, the information being included in, for example, RRC signaling, a MAC CE, or DCI, or the terminal apparatus 40 may use an AI/ML model that is set and trained on the basis of the information on which to base learning.

### (Data Set Providing Apparatus)

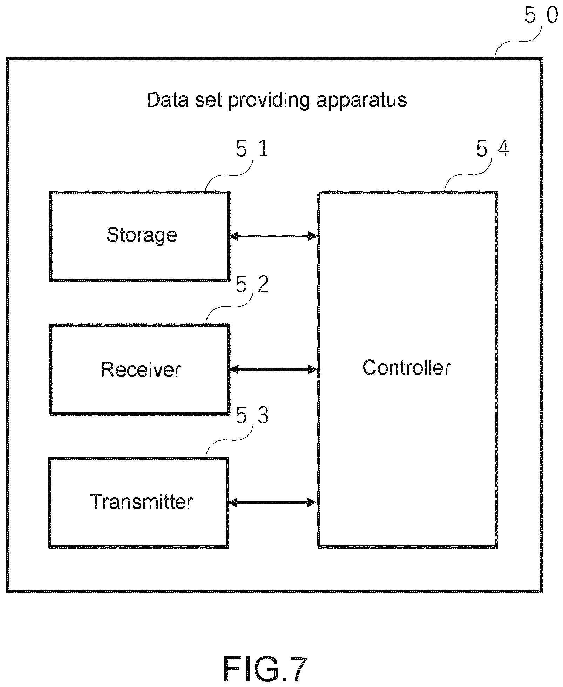

Fig. 7 illustrates a configuration of a data set providing apparatus 50 according to the first embodiment. The data set providing apparatus 50 is an apparatus that provides information on which to base learning of an AI/ML model, and can be accessed in common by terminal apparatuses of different vendors and by base stations of different vendors. The data set providing apparatus 50 may be an apparatus that has a physical body, or may be defined as, for example, a single network function (NF).

The data set providing apparatus 50 includes a storage 51, a receiver 52, a transmitter 53, and a controller 54. The storage 51 stores therein information on which to base learning of an AI/ML model. The receiver 52 receives, from the base station 20 or the terminal apparatus 40, a request for provision of information on which to base learning of an AI/ML model. The transmitter 53 transmits information on which to base learning of an AI/ML model to the base station 20 or terminal apparatus 40 having transmitted the request for provision. The controller 54 controls the storage 51, the receiver 52, and the transmitter 53.

The base station 20 or the terminal apparatus 40 accesses an entity of the data set providing apparatus 50 before training of an AI/ML model, and receives in advance information on which to base learning of an AI/ML model (such as the number of input nodes, the number of output nodes, a layer configuration, a value of weighting coefficient, a layer in which learning is performed, and learning data). This enables the base station 20 and the terminal apparatus 40 to acquire, from the data set providing apparatus 50 in common, one piece of information on which to base learning, the piece of information not depending on the specifications or the implementation of a specific vendor. This makes it possible to set and train an AI/ML model that is interoperable among different vendors.

The data set providing apparatus 50 may be defined as a first data set providing apparatus intended for base station, and a second data set providing apparatus intended for terminal apparatus, the first and second data set providing apparatuses being defined separately from each other. Alternatively, only one of the first data set providing apparatus intended for base station and the second data set providing apparatus intended for terminal apparatus may be defined.

When, for example, two data set providing apparatuses are defined separately from each other, the base station 20 receives in advance information on which to base learning of an AI/ML model (such as the number of input nodes, the number of output nodes, a layer configuration, a value of weighting coefficient, a layer in which learning is performed, and learning data) from the first data set providing apparatus. Further, the terminal apparatus 40 receives in advance information on which to base learning of an AI/ML model (such as the number of input nodes, the number of output nodes, a layer configuration, a value of weighting coefficient, a layer in which learning is performed, and learning data) from the second data set providing apparatus.

The base station 20 or the terminal apparatus 40 may transmit, to the data set providing apparatus 50, a request for provision of information on which to base learning of an AI/ML model. When the data set providing apparatus 50 receives the request for provision, the data set providing apparatus 50 may newly transmit information on which to base learning of an AI/ML model to the base station 20 or terminal apparatus 40 having transmitted the request for provision.

As capability information regarding its own capability, the base station 20 or the terminal apparatus 40 may transmit, to the data set providing apparatus 50, information regarding, for example, a currently held AI/ML model that has performed learning, a supported AI/ML model, the capability of a CPU or a GPU, whether it is an apparatus that supports reduced capability (RedCap), whether it is an IoT terminal of, for example, NB-IoT or eMTC, and a supported bandwidth. The data set providing apparatus 50 may determine information on which to base learning of an AI/ML model on the basis of the capability information, and may transmit the determined information to the base station 20 or the terminal apparatus 40. Further, on the basis of the information regarding the currently held AI/ML model having performed learning, the information being received from the base station 20 or the terminal apparatus 40, the data set providing apparatus 50 may update information on which to base learning of an AI/ML model, the updated information being held by the data set providing apparatus 50.

The base station 20 may transmit, to the terminal apparatus 40, information regarding access to the data set providing apparatus 50. For example, the base station 20 may transmit, to the terminal apparatus 40, information such as an IP address or MAC address that is necessary for the terminal apparatus 40 to access the data set providing apparatus 50.

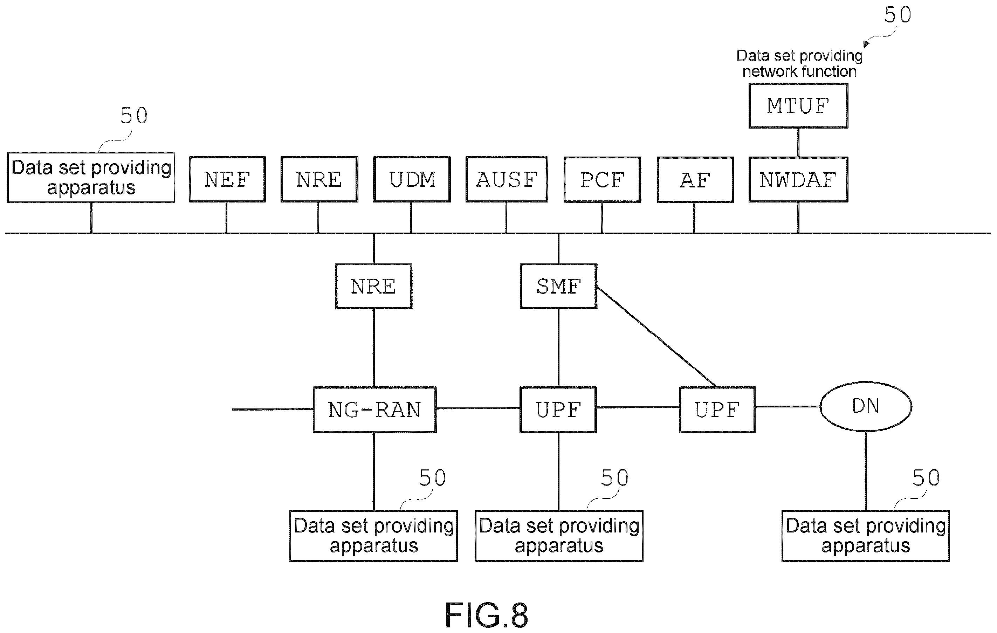

Fig. 8 illustrates an example of a configuration of a wireless communication network that includes the data set providing apparatus 50. For example, the data set providing apparatus 50 may be arranged under a data network that is beyond a core network, as illustrated in the figure. For example, the data set providing apparatus 50 may be included in a server (such as a mobile edge computing (MEC) server) that is connected to a user plane function (UPF). For example, the data set providing apparatus 50 may be included in a server (such as a MEC server) that is connected to the base station 20. For example, the data set providing apparatus 50 may be defined as a new network function (NF). For example, the data set providing apparatus 50 may be defined as an additional function of an existing NF (such as a model training logical function (MTLF)). Further, not only a single data set providing apparatus 50 arranged at a single position but also a plurality of data set providing apparatuses 50 arranged at a plurality of positions may be adopted, or not only a single data set providing apparatus 50 but also a plurality of data set providing apparatuses 50 may be defined.

### (Operation Performed Upon Handover)

When the terminal apparatus 40 is handed over from a certain base station (a source base station) to another base station (a target base station), the source base station may transmit, to the target base station, information regarding an AI/ML model that has performed learning (such as the type of AI/ML model, the number of input nodes, the number of output nodes, a layer configuration, and a value of weighting coefficient), information on which to base learning of an AI/ML model (such as the number of input nodes, the number of output nodes, a layer configuration, and a value of weighting coefficient), and capability information regarding the capability for an AI/ML model (such as the type of a supported AI/ML model, the number of input nodes, the number of output nodes, and a layer configuration), and other information. When the target base station receives these pieces of information from the source base station, the target base station may set and train an AI/ML model included in the decoder 23 of the target base station, on the basis of the received information.

On the basis of, for example, capability information regarding the capability of the terminal apparatus 40 or a base station with respect to an AI/ML model, or information regarding an AI/ML model that has performed learning, a base station to which the terminal apparatus 40 is handed over may be limited or determined. In other words, when the terminal apparatus 40 is handed over, there will be a need to newly set and train an AI/ML model if an AI/ML model that has already performed learning is not allowed to be used at a base station to which the terminal apparatus 40 is handed over. This results in an increase in processing burdens imposed on the terminal apparatus 40 and the base station. Thus, the terminal apparatus 40 may be handed over to a base station that can use an AI/ML model that has already performed learning.

### (Operation for Each Use Case)

In general, the following are three use cases in which a terminal apparatus and a base station perform AI/ML-model-based signal processing together.
1. Only the base station uses an AI/ML model.
2. Only the terminal apparatus uses an AI/ML model.
3. Both the terminal apparatus and the base station use AI/ML models (the case of the first embodiment).

In the case of "1" described above, only the base station uses an AI/ML model. Thus, it is not a problem if AI/ML models of different base stations are different. When, for example, there is a plurality of base station vendors, each of the plurality of base station vendors can set and train an AI/ML model individually depending on the implementation.

In the case of "2" described above, only the terminal apparatus uses an AI/ML model. Thus, it is not a problem if AI/ML models of different terminal apparatuses are different. When, for example, there is a plurality of terminal vendors, each of the plurality of terminal vendors can set and train an AI/ML model individually depending on the implementation.

However, there may be a difference in processing capability between terminal apparatuses, and there may be a terminal apparatus that is not capable of setting and training an AI/ML model properly. In order to deal with this issue, the base station may transmit, to the terminal apparatus, information on which to base learning of an AI/ML model (such as the number of input nodes, the number of output nodes, a layer configuration, and a value of weighting coefficient). Further, the terminal apparatus may transmit, to the base station, information regarding the capability of the terminal apparatus with respect to an AI/ML model (such as the type of a supported AI/ML model, the number of input nodes, the number of output nodes, a layer configuration, and information regarding a held CPU or GPU).

In the case of "3" described above, both the terminal apparatus and the base station use AI/ML models. Thus, there is a need to consider a difference between the terminal apparatus and the base station. In order to deal with this issue, the base station may transmit, to the terminal apparatus, information on which to base learning of an AI/ML model (such as the number of input nodes, the number of output nodes, a layer configuration, and a value of weighting coefficient). Further, the terminal apparatus may transmit, to the base station, information regarding the capability of the terminal apparatus with respect to an AI/ML model (such as the type of a supported AI/ML model, the number of input nodes, the number of output nodes, a layer configuration, and information regarding a held CPU or GPU).

### (Communication Between Terminal Apparatuses and Communication Between Base Stations)

The technology according to the present disclosure can also be applied to communication between terminal apparatuses such as sidelink and communication between base stations such as integrated access backhaul (IAB).

When, for example, there are a parent terminal apparatus and a child terminal apparatus in communication between terminal apparatuses, the parent terminal apparatus may serve a function of the base station described above, and the child terminal apparatus may serve a function of the terminal apparatus described above.

When, for example, there are a parent base station and a child base station in communication between base stations, the parent base station may serve a function of the base station described above, and the child base station may serve a function of the terminal apparatus described above.

### (Examples of Procedure)

Six examples of a procedure in which the technology according to the present disclosure is applied to channel-state-information (CSI) feedback are described below. However, a range in which the technology according to the present disclosure can be applied is not limited thereto. For example, the technology according to the present disclosure can also be applied to, for example, beam management, beam positioning, or mobility management.

### (First Example)

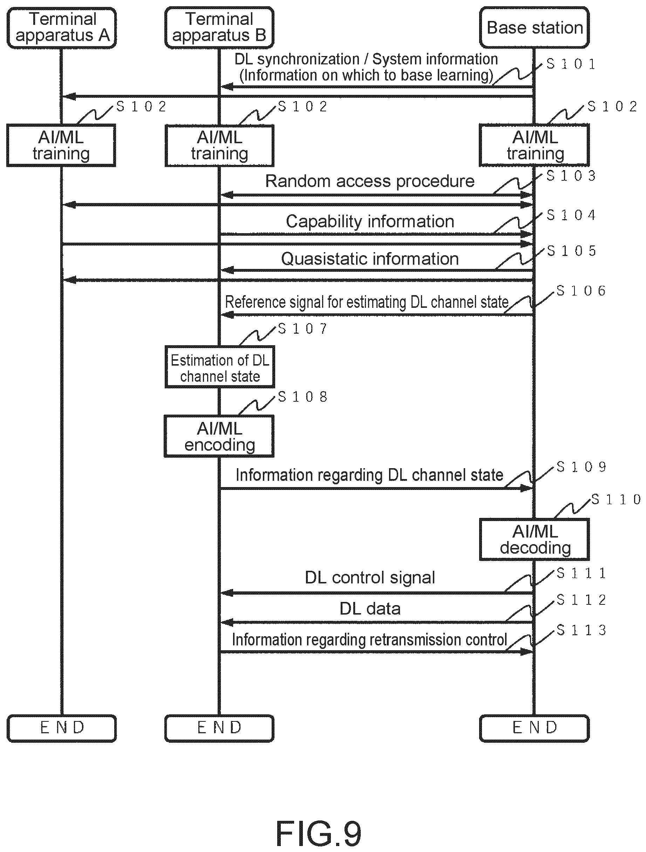

Fig. 9 is a diagram used to describe an example of a procedure in which a base station includes, in system information, information on which to base learning of an AI/ML model and transmits the system information to each of different terminal apparatuses.

In Step S101, each of terminal apparatuses A and B receives a synchronization signal transmitted by a base station, and performs downlink synchronization. Further, each of the terminal apparatuses A and B receives system information transmitted by the base station to receive information necessary for cell connection. Here, the system information includes information on which to base learning of an AI/ML model.

In Step S102, each of the terminal apparatuses A and B may additionally train an AI/ML model included in an encoder of a corresponding one of the terminal apparatuses A and B, on the basis of the information on which to base learning of an AI/ML model, the information being included in the system information received from the base station. The base station may additionally train an AI/ML model included in a decoder of the base station, on the basis of the information on which to base learning of an AI/ML model, the information being included in the system information transmitted by the base station.

Each of the terminal apparatuses A and B may determine whether to perform additional training, depending on the implementation or on the basis of an instruction transmitted by the base station. The terminal apparatuses A and B may obtain different training results (learning results) since the terminal apparatuses A and B perform additional training individually.

In Step S103, each of the terminal apparatuses A and B performs a random access procedure, and establishes connection with the base station. Each of the terminal apparatuses A and B achieves uplink synchronization by the random access procedure, and completes the connection with the base station. The random access procedure may be performed after completion of additional training or during the additional training.

In Step S104, each of the terminal apparatuses A and B transmits capability information regarding the capability of a corresponding one of the terminal apparatuses A and B to the base station. The capability information may include capability information regarding the capability for an AI/ML model. In Step S105, the base station transmits quasistatic information to each of the terminal apparatuses A and B. The quasistatic information may be, for example, RRC signaling.

In Step S106, the base station transmits a reference signal for estimating a downlink channel state to the terminal apparatus B. In Step S107, the terminal apparatus B performs processing of estimating a downlink channel state, and generates downlink-channel-state information.

In Step S108, the terminal apparatus B performs signal processing based on an AI/ML model included in the encoder of the terminal apparatus B to encode the downlink-channel-state information. In Step S109, the terminal apparatus B feeds back the encoded downlink-channel-state information to the base station.

The downlink-channel-state information described above may be an uplink control signal (such as a channel quality indicator (CQI), a precoding matrix indicator (PMI), or a resource indicator (RI)) that is defined by uplink control information (UCI), may be channel response information itself, or may be eigenvalue information regarding an eigenvalue of a channel.

In Step S110, the base station performs signal processing based on an AI/ML model included in the decoder of the base station to decode the encoded downlink-channel-state information received from the terminal apparatus B, and acquires the downlink-channel-state information.

In Step S111, the base station transmits a downlink control signal. The downlink control signal may be, for example, downlink control information (DCI). The downlink control signal may include information regarding the technology according to the present disclosure. Further, the downlink control signal may be partially determined on the basis of the downlink-channel-state information fed back above.

In Step S112, the base station transmits downlink data. The downlink data may be, for example, a physical downlink shared channel (PDSCH). In Step S113, the terminal apparatus B transmits information regarding retransmission control to the base station according to a result of decoding for the downlink data. For example, the information regarding retransmission control may be acknowledge (ACK) / negative acknowledge (NACK), or may be "hybrid automatic repeat request - acknowledge" (HARQ-ACK).

### (Second Example)

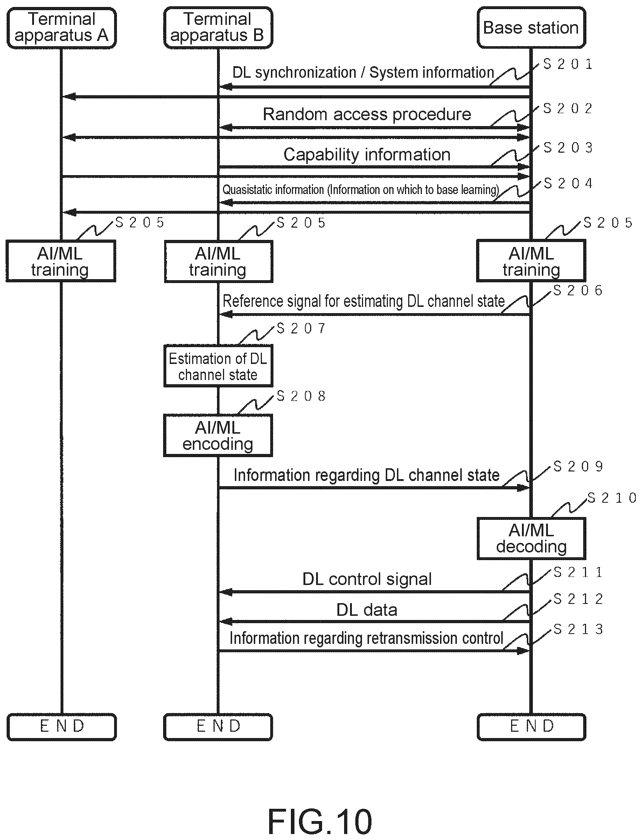

Fig. 10 is a diagram used to describe an example of a procedure in which a base station includes, in quasistatic information (RRC signaling), information on which to base learning of an AI/ML model and transmits the quasistatic information to each of different terminal apparatuses.

In Step S201, each of terminal apparatuses A and B receives a synchronization signal transmitted by a base station, and performs downlink synchronization. Further, each of the terminal apparatuses A and B receives system information transmitted by the base station to receive information necessary for cell connection.

In Step S202, each of the terminal apparatuses A and B performs a random access procedure, and establishes connection with the base station. Each of the terminal apparatuses A and B achieves uplink synchronization by the random access procedure, and completes the connection with the base station. The random access procedure may be performed after completion of additional training described later or during the additional training.

In Step S203, each of the terminal apparatuses A and B transmits capability information regarding the capability of a corresponding one of the terminal apparatuses A and B to the base station. The capability information may include capability information regarding the capability for an AI/ML model.

In Step S204, the base station transmits quasistatic information to each of the terminal apparatuses A and B. The quasistatic information may be, for example, RRC signaling. The quasistatic information includes information on which to base learning of an AI/ML model.

In Step S205, each of the terminal apparatuses A and B may additionally train an AI/ML model included in an encoder of a corresponding one of the terminal apparatuses A and B, on the basis of the information on which to base learning of an AI/ML model, the information being included in the quasistatic information received from the base station. The base station may additionally train an AI/ML model included in a decoder of the base station, on the basis of the information on which to base learning of an AI/ML model, the information being included in the quasistatic information transmitted by the base station.

Each of the terminal apparatuses A and B may determine whether to perform additional training, depending on the implementation or on the basis of an instruction transmitted by the base station. The terminal apparatuses A and B may obtain different training results (learning results) since the terminal apparatuses A and B perform additional training individually.

In Step S206, the base station transmits a reference signal for estimating a downlink channel state to the terminal apparatus B. In Step S207, the terminal apparatus B performs processing of estimating a downlink channel state, and generates downlink-channel-state information.

In Step S208, the terminal apparatus B performs signal processing based on an AI/ML model included in the encoder of the terminal apparatus B to encode the downlink-channel-state information. In Step S209, the terminal apparatus B feeds back the encoded downlink-channel-state information to the base station.

The downlink-channel-state information described above may be an uplink control signal (such as a CQI, a PMI, or an RI) that is defined by UCI, may be channel response information itself, or may be eigenvalue information regarding an eigenvalue of a channel.

In Step S210, the base station performs signal processing based on an AI/ML model included in the decoder of the base station to decode the encoded downlink-channel-state information received from the terminal apparatus B, and acquires the downlink-channel-state information.

In Step S211, the base station transmits a downlink control signal. The downlink control signal may be, for example, DCI. The downlink control signal may include information regarding the technology according to the present disclosure. Further, the downlink control signal may be partially determined on the basis of the downlink-channel-state information fed back above.

In Step S212, the base station transmits downlink data. The downlink data may be, for example, a PDSCH. In Step S213, the terminal apparatus B transmits information regarding retransmission control to the base station according to a result of decoding for the downlink data. For example, the information regarding retransmission control may be ACK / NACK, or may be HARQ-ACK.

### (Third Example)

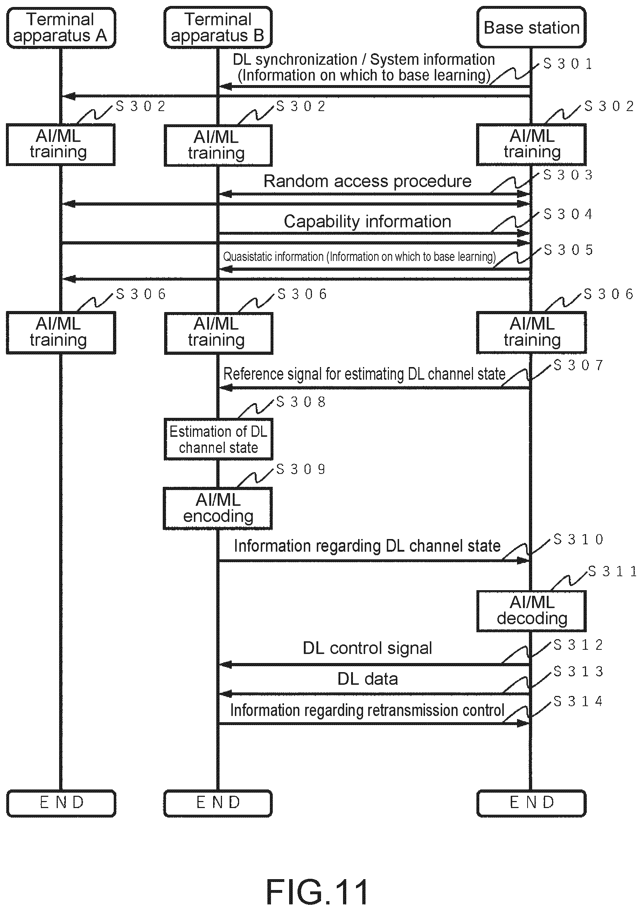

Fig. 11 is a diagram used to describe an example of a procedure in which a base station includes, in each of system information and quasistatic information (RRC signaling), information on which to base learning of an AI/ML model and transmits the system information and the quasistatic information to each of different terminal apparatuses.

In Step S301, each of terminal apparatuses A and B receives a synchronization signal transmitted by a base station, and performs downlink synchronization. Further, each of the terminal apparatuses A and B receives system information transmitted by the base station to receive information necessary for cell connection. Here, the system information includes information on which to base learning of an AI/ML model.

In Step S302, each of the terminal apparatuses A and B may additionally train an AI/ML model included in an encoder of a corresponding one of the terminal apparatuses A and B, on the basis of the information on which to base learning of an AI/ML model, the information being included in the system information received from the base station. The base station may additionally train an AI/ML model included in a decoder of the base station, on the basis of the information on which to base learning of an AI/ML model, the information being included in the system information transmitted by the base station.

Each of the terminal apparatuses A and B may determine whether to perform additional training, depending on the implementation or on the basis of an instruction transmitted by the base station. The terminal apparatuses A and B may obtain different training results (learning results) since the terminal apparatuses A and B perform additional training individually.

In Step S303, each of the terminal apparatuses A and B performs a random access procedure, and establishes connection with the base station. Each of the terminal apparatuses A and B achieves uplink synchronization by the random access procedure, and completes the connection with the base station. The random access procedure may be performed after completion of additional training or during the additional training.

In Step S304, each of the terminal apparatuses A and B transmits capability information regarding the capability of a corresponding one of the terminal apparatuses A and B to the base station. The capability information may include capability information regarding the capability for an AI/ML model.

In Step S305, the base station transmits quasistatic information to each of the terminal apparatuses A and B. The quasistatic information may be, for example, RRC signaling. The quasistatic information includes information on which to base learning of an AI/ML model.

In Step S306, each of the terminal apparatuses A and B may further additionally train an AI/ML model included in the encoder of a corresponding one of the terminal apparatuses A and B, on the basis of the information on which to base learning of an AI/ML model, the information being included in the quasistatic information received from the base station. The base station may further additionally train an AI/ML model included in the decoder of the base station, on the basis of the information on which to base learning of an AI/ML model, the information being included in the quasistatic information transmitted by the base station.

Each of the terminal apparatuses A and B may determine whether to perform further additional training, depending on the implementation or on the basis of an instruction transmitted by the base station. The terminal apparatuses A and B may obtain different training results (learning results) since the terminal apparatuses A and B perform further additional training individually.

In Step S307, the base station transmits a reference signal for estimating a downlink channel state to the terminal apparatus B. In Step S308, the terminal apparatus B performs processing of estimating a downlink channel state, and generates downlink-channel-state information.

In Step S309, the terminal apparatus B performs signal processing based on an AI/ML model included in the encoder of the terminal apparatus B to encode the downlink-channel-state information. In Step S310, the terminal apparatus B feeds back the encoded downlink-channel-state information to the base station.

The downlink-channel-state information described above may be an uplink control signal (such as a CQI, a PMI, or an RI) that is defined by UCI, may be channel response information itself, or may be eigenvalue information regarding an eigenvalue of a channel.

In Step S311, the base station performs signal processing based on an AI/ML model included in the decoder of the base station to decode the encoded downlink-channel-state information received from the terminal apparatus B, and acquires the downlink-channel-state information.

In Step S312, the base station transmits a downlink control signal. The downlink control signal may be, for example, DCI. The downlink control signal may include information regarding the technology according to the present disclosure. Further, the downlink control signal may be partially determined on the basis of the downlink-channel-state information fed back above.

In Step S313, the base station transmits downlink data. The downlink data may be, for example, a PDSCH. In Step S314, the terminal apparatus B transmits information regarding retransmission control to the base station according to a result of decoding for the downlink data. For example, the information regarding retransmission control may be ACK / NACK, or may be HARQ-ACK.

### (Fourth Example)

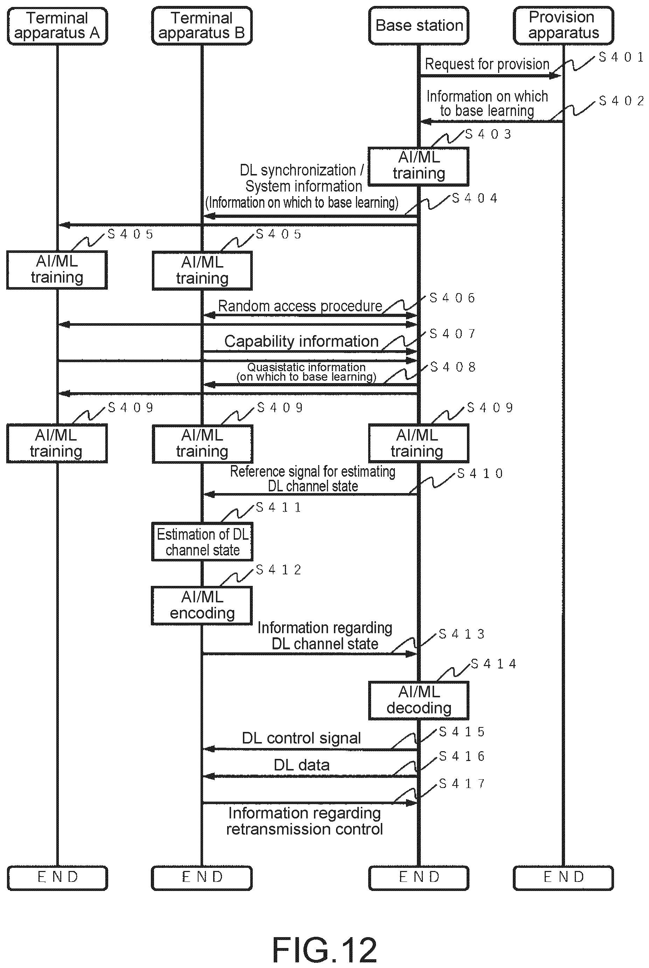

Fig. 12 is a diagram used to describe an example of a procedure in which a base station receives, from a data set providing apparatus, information on which to base learning of an AI/ML model; includes, in each of system information and quasistatic information (RRC signaling), the information on which to base learning of an AI/ML model; and transmits the system information and the quasistatic information to each of different terminal apparatuses.

In Step S401, a base station transmits, to a data set providing apparatus, a request for provision of information on which to base learning of an AI/ML model. In Step S402, the data set providing apparatus transmits the information on which to base learning of an AI/ML model to the base station.

In Step S403, the base station may additionally train an AI/ML model included in a decoder of the base station, on the basis of the information on which to base learning of an AI/ML model, the information being received from the data set providing apparatus.

In Step S404, each of terminal apparatuses A and B receives a synchronization signal transmitted by the base station, and performs downlink synchronization. Further, each of the terminal apparatuses A and B receives system information transmitted by the base station to receive information necessary for cell connection. Here, the system information includes the information on which to base learning of an AI/ML model.

In Step S405, each of the terminal apparatuses A and B may additionally train an AI/ML model included in an encoder of a corresponding one of the terminal apparatuses A and B, on the basis of the information on which to base learning of an AI/ML model, the information being included in the system information received from the base station.

Each of the terminal apparatuses A and B may determine whether to perform additional training, depending on the implementation or on the basis of an instruction transmitted by the base station. The terminal apparatuses A and B may obtain different training results (learning results) since the terminal apparatuses A and B perform additional training individually.

In Step S406, each of the terminal apparatuses A and B performs a random access procedure, and establishes connection with the base station. Each of the terminal apparatuses A and B achieves uplink synchronization by the random access procedure, and completes the connection with the base station. The random access procedure may be performed after completion of additional training or during the additional training.

In Step S407, each of the terminal apparatuses A and B transmits capability information regarding the capability of a corresponding one of the terminal apparatuses A and B to the base station. The capability information may include capability information regarding the capability for an AI/ML model.

In Step S408, the base station transmits quasistatic information to each of the terminal apparatuses A and B. The quasistatic information may be, for example, RRC signaling. The quasistatic information includes the information on which to base learning of an AI/ML model.

In Step S409, each of the terminal apparatuses A and B may further additionally train an AI/ML model included in the encoder of a corresponding one of the terminal apparatuses A and B, on the basis of the information on which to base learning of an AI/ML model, the information being included in the quasistatic information received from the base station. The base station may further additionally train an AI/ML model included in the decoder of the base station, on the basis of the information on which to base learning of an AI/ML model, the information being included in the quasistatic information transmitted by the base station.

Each of the terminal apparatuses A and B may determine whether to perform further additional training, depending on the implementation or on the basis of an instruction transmitted by the base station. The terminal apparatuses A and B may obtain different training results (learning results) since the terminal apparatuses A and B perform further additional training individually.

In Step S410, the base station transmits a reference signal for estimating a downlink channel state to the terminal apparatus B. In Step S411, the terminal apparatus B performs processing of estimating a downlink channel state, and generates downlink-channel-state information.

In Step S412, the terminal apparatus B performs signal processing based on an AI/ML model included in the encoder of the terminal apparatus B to encode the downlink-channel-state information. In Step S413, the terminal apparatus B feeds back the encoded downlink-channel-state information to the base station.

The downlink-channel-state information described above may be an uplink control signal (such as a CQI, a PMI, or an RI) that is defined by UCI, may be channel response information itself, or may be eigenvalue information regarding an eigenvalue of a channel.

In Step S414, the base station performs signal processing based on an AI/ML model included in the decoder of the base station to decode the encoded downlink-channel-state information received from the terminal apparatus B, and acquires the downlink-channel-state information.

In Step S415, the base station transmits a downlink control signal. The downlink control signal may be, for example, DCI. The downlink control signal may include information regarding the technology according to the present disclosure. Further, the downlink control signal may be partially determined on the basis of the downlink-channel-state information fed back above.

In Step S416, the base station transmits downlink data. The downlink data may be, for example, a PDSCH. In Step S417, the terminal apparatus B transmits information regarding retransmission control to the base station according to a result of decoding for the downlink data. For example, the information regarding retransmission control may be ACK / NACK, or may be HARQ-ACK.

### (Fifth Example)

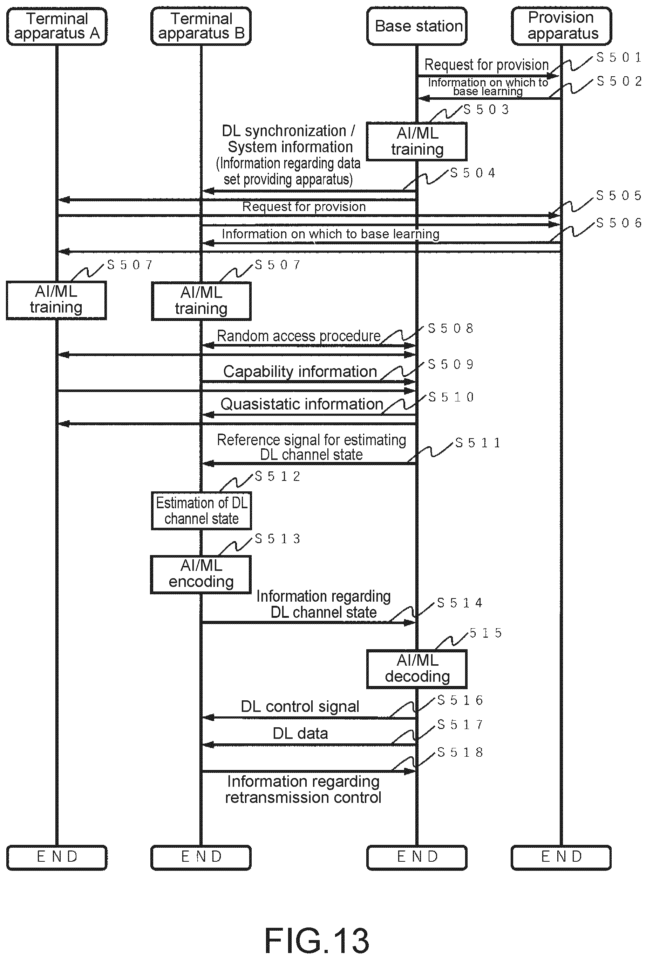

Fig. 13 is a diagram used to describe an example of a procedure in which each of a base station and a terminal apparatus receives, from a data set providing apparatus, information on which to base learning of an AI/ML model.

In Step S501, a base station transmits, to a data set providing apparatus, a request for provision of information on which to base learning of an AI/ML model. In Step S502, the data set providing apparatus transmits the information on which to base learning of an AI/ML model to the base station.

In Step S503, the base station may additionally train an AI/ML model included in a decoder of the base station, on the basis of the information on which to base learning of an AI/ML model, the information being received from the data set providing apparatus.

In Step S504, each of terminal apparatuses A and B receives a synchronization signal transmitted by the base station, and performs downlink synchronization. Further, each of the terminal apparatuses A and B receives system information transmitted by the base station to receive information necessary for cell connection. Here, the system information includes information regarding the data set providing apparatus.

In Step S505, each of the terminal apparatuses A and B transmits, to the data set providing apparatus, a request for provision of the information on which to base learning of an AI/ML model, on the basis of the information regarding the data set providing apparatus, the information regarding the data set providing apparatus being included in the system information received from the base station. In Step S506, the data set providing apparatus transmits the information on which to base learning of an AI/ML model to each of the terminal apparatuses A and B.

In Step S507, each of the terminal apparatuses A and B may additionally train an AI/ML model included in an encoder of a corresponding one of the terminal apparatuses A and B, on the basis of the information on which to base learning of an AI/ML model, the information being received from the data set providing apparatus.

Each of the terminal apparatuses A and B may determine whether to perform additional training, depending on the implementation or on the basis of an instruction transmitted by the base station. The terminal apparatuses A and B may obtain different training results (learning results) since the terminal apparatuses A and B perform additional training individually.

In Step S508, each of the terminal apparatuses A and B performs a random access procedure, and establishes connection with the base station. Each of the terminal apparatuses A and B achieves uplink synchronization by the random access procedure, and completes the connection with the base station. The random access procedure may be performed after completion of additional training or during the additional training.

In Step S509, each of the terminal apparatuses A and B transmits capability information regarding the capability of a corresponding one of the terminal apparatuses A and B to the base station. The capability information may include capability information regarding the capability for an AI/ML model.

In Step S510, the base station transmits quasistatic information to each of the terminal apparatuses A and B. The quasistatic information may be, for example, RRC signaling. The quasistatic information includes information regarding the technology according to the present disclosure.

In Step S511, the base station transmits a reference signal for estimating a downlink channel state to the terminal apparatus B. In Step S512, the terminal apparatus B performs processing of estimating a downlink channel state, and generates downlink-channel-state information.

In Step S513, the terminal apparatus B performs signal processing based on an AI/ML model included in the encoder of the terminal apparatus B to encode the downlink-channel-state information. In Step S514, the terminal apparatus B feeds back the encoded downlink-channel-state information to the base station.

The downlink-channel-state information described above may be an uplink control signal (such as a CQI, a PMI, or an RI) that is defined by UCI, may be channel response information itself, or may be eigenvalue information regarding an eigenvalue of a channel.

In Step S515, the base station performs signal processing based on an AI/ML model included in the decoder of the base station to decode the encoded downlink-channel-state information received from the terminal apparatus B, and acquires the downlink-channel-state information.

In Step S516, the base station transmits a downlink control signal. The downlink control signal may be, for example, DCI. The downlink control signal may include information regarding the technology according to the present disclosure. Further, the downlink control signal may be partially determined on the basis of the downlink-channel-state information fed back above.

In Step S517, the base station transmits downlink data. The downlink data may be, for example, a PDSCH. In Step S518, the terminal apparatus B transmits information regarding retransmission control to the base station according to a result of decoding for the downlink data. For example, the information regarding retransmission control may be ACK / NACK, or may be HARQ-ACK.

### (Sixth Example)

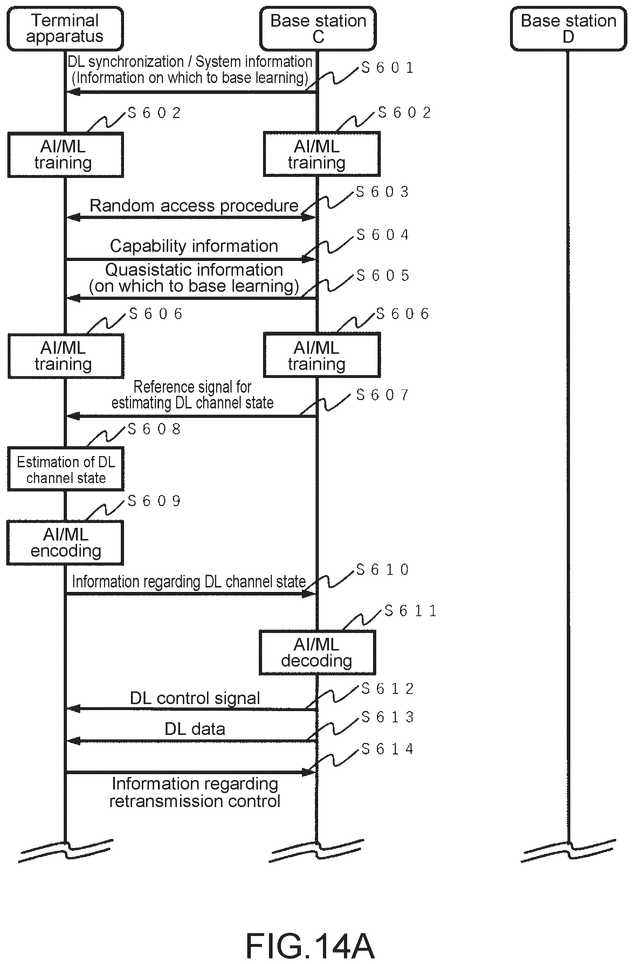

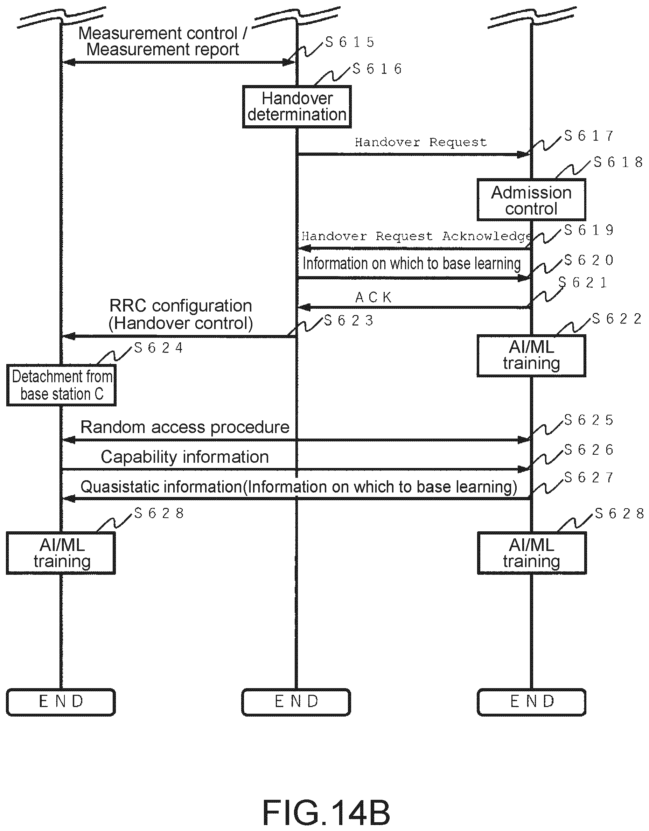

Fig. 14 is a diagram used to describe an example of a procedure in which a terminal apparatus is handed over to a different base station.

In Step S601, a terminal apparatus receives a synchronization signal transmitted by a base station C, and performs downlink synchronization. Further, the terminal apparatus receives system information transmitted by the base station C to receive information necessary for cell connection. Here, the system information includes information on which to base learning of an AI/ML model.

In Step S602, the terminal apparatus may additionally train an AI/ML model included in an encoder of the terminal apparatus, on the basis of the information on which to base learning of an AI/ML model, the information being included in the system information received from the base station C. The base station C may additionally train an AI/ML model included in a decoder of the base station C, on the basis of the information on which to base learning of an AI/ML model, the information being included in the system information transmitted by the base station C. The terminal apparatus may determine whether to perform additional training, depending on the implementation or on the basis of an instruction transmitted by the base station C.

In Step S603, the terminal apparatus performs a random access procedure, and establishes connection with the base station C. The terminal apparatus achieves uplink synchronization by the random access procedure, and completes the connection with the base station C. The random access procedure may be performed after completion of additional training or during the additional training.

In Step S604, the terminal apparatus transmits capability information regarding the capability of the terminal apparatus to the base station C. The capability information may include capability information regarding the capability for an AI/ML model.

In Step S605, the base station C transmits quasistatic information to the terminal apparatus. The quasistatic information may be, for example, RRC signaling. The quasistatic information includes information on which to base learning of an AI/ML model.

In Step S606, the terminal apparatus may further additionally train an AI/ML model included in the encoder of the terminal apparatus, on the basis of the information on which to base learning of an AI/ML model, the information being included in the quasistatic information received from the base station C. The base station C may further additionally train an AI/ML model included in the decoder of the base station C, on the basis of the information on which to base learning of an AI/ML model, the information being included in the quasistatic information transmitted by the base station C. The terminal apparatus may determine whether to perform further additional training, depending on the implementation or on the basis of an instruction transmitted by the base station C.

In Step S607, the base station C transmits a reference signal for estimating a downlink channel state to the terminal apparatus. In Step S608, the terminal apparatus performs processing of estimating a downlink channel state, and generates downlink-channel-state information.

In Step S609, the terminal apparatus performs signal processing based on an AI/ML model included in the encoder of the terminal apparatus to encode the downlink-channel-state information. In Step S610, the terminal apparatus feeds back the encoded downlink-channel-state information to the base station C.

The downlink-channel-state information described above may be an uplink control signal (such as a CQI, a PMI, or an RI) that is defined by UCI, may be channel response information itself, or may be eigenvalue information regarding an eigenvalue of a channel.

In Step S611, the base station C performs signal processing based on an AI/ML model included in the decoder of the base station C to decode the encoded downlink-channel-state information received from the terminal apparatus, and acquires the downlink-channel-state information.

In Step S612, the base station C transmits a downlink control signal. The downlink control signal may be, for example, DCI. The downlink control signal may include information regarding the technology according to the present disclosure. Further, the downlink control signal may be partially determined on the basis of the downlink-channel-state information fed back above.

In Step S613, the base station C transmits downlink data. The downlink data may be, for example, a PDSCH. In Step S614, the terminal apparatus transmits information regarding retransmission control to the base station C according to a result of decoding for the downlink data. For example, the information regarding retransmission control may be ACK / NACK, or may be HARQ-ACK.

In Step S615, the base station C (a source cell) and the terminal apparatus perform a measurement procedure related to a connection cell. In Step S616, the base station C determines, on the basis of a result of the measurement procedure, whether there is a need for handover, and determines that there is a need for handover.

In Step S617, the base station C transmits a handover request to a base station D that is a candidate target cell. In Step S618, the base station D performs admission control. In Step S619, the base station D transmits, to the base station C, a report (handover request acknowledge) about whether handover is permitted.

In Step S620, the base station C transmits, to the base station D, information on which to base learning of an AI/ML model held by the base station C. Further, the base station C may transmit information regarding its own AI/ML model having performed learning to the base station D. In Step S621, the base station D transmits ACK to the base station C.

In Step S622, the base station D may further additionally train an AI/ML model included in a decoder of the base station D, on the basis of the information on which to base learning of an AI/ML model, the information being received from the base station C.

In Step S623, the base station C performs RCC configuration on the terminal apparatus, and transmits information regarding handover to the terminal apparatus. The information regarding handover includes information on which to base learning of an AI/ML model. In Step S624, the terminal apparatus is detached from the base station C.

In Step S625, the terminal apparatus performs a random access procedure, and establishes connection with the base station D. The terminal apparatus achieves uplink synchronization by the random access procedure, and completes the connection with the base station D. The random access procedure may be performed after completion of additional training or during the additional training.

In Step S626, the terminal apparatus transmits capability information regarding the capability of the terminal apparatus to the base station D. The capability information may include capability information regarding the capability for an AI/ML model.

In Step S627, the base station D transmits quasistatic information to the terminal apparatus. The quasistatic information may be, for example, RRC signaling. The quasistatic information includes information on which to base learning of an AI/ML model.

In Step S628, the terminal apparatus may further additionally train an AI/ML model included in the encoder of the terminal apparatus, on the basis of the information on which to base learning of an AI/ML model, the information being included in the quasistatic information received from the base station D. The base station D may further additionally train an AI/ML model included in the decoder of the base station D, on the basis of the information on which to base learning of an AI/ML model, the information being included in the quasistatic information transmitted by the base station D. The terminal apparatus may determine whether to perform further additional training, depending on the implementation or on the basis of an instruction transmitted by the base station D.

### (Conclusion)

As described above, a communication apparatus (the terminal apparatus 40 or the base station 20) according to the first embodiment of the present disclosure includes a signal processor (the encoder 43 or the decoder 23) that includes an AI/ML model, a receiver that receives, from another communication apparatus (the base station 20 or the terminal apparatus 40), information on which to base learning, and a controller that sets the AI/ML model on the basis of the information on which to base learning. Such characteristics enable the communication apparatus (the terminal apparatus 40 or the base station 20) according to the first embodiment of the present disclosure to perform signal processing without being conscious of a difference between AI/ML models.

Further, the data set providing apparatus 50 according to the first embodiment of the present disclosure is a data set providing apparatus that can be accessed in common by communication apparatuses of different vendors. The data set providing apparatus 50 includes the storage 51 storing therein information on which to base learning of an AI/ML model, the receiver 52 receiving, from a communication apparatus, a request for provision of the information on which to base learning of an AI/ML model, and a transmitter that transmits the information on which to base learning of an AI/ML model to the communication apparatus. Such characteristics enable the base station 20 and the terminal apparatus 40 to acquire, from the data set providing apparatus 50 in common, one piece of information on which to base learning, the piece of information not depending on the specifications or the implementation of a specific vendor. This makes it possible to set and train an AI/ML model that is interoperable among different vendors.

The technology according to the present disclosure is not limited to a specific standard, and any modifications may be made to the illustrated settings as appropriate. Note that the embodiments described above are examples used to embody the technology according to the present disclosure, and the technology according to the present disclosure may be embodied in a variety of other embodiments. For example, various modifications, replacements, omissions, or combinations thereof may be applied without departing from the scope of the present disclosure. Embodiments obtained by applying, for example, such modifications, replacements, omissions, or combinations are also included in the scope of the present disclosure, as well as the scope of claimed embodiments of the present disclosure and their equivalents.

The processing procedures described in the present disclosure may be considered a method including a series of the procedures. Alternatively, the processing procedures described in the present disclosure may be considered a program used to cause a computer to perform the series of the procedures, or a recording medium that has stored therein the program. Further, the processing described above may be performed by a processor such as a CPU of a computer. Further, the type of the recording medium is not particularly limited since the embodiments of the present disclosure are not affected by the type of the recording medium.

The structural elements illustrated in Figs. 2 to 7 in the present disclosure may be provided by software or may be implemented by hardware. For example, each structural element may be a software module provided by software such as a microprogram, and may be provided by a processor executing the software module. Alternatively, each structural element may be implemented by a circuit block on a semiconductor chip (a die), that is, for example, an integrated circuit such as an application specific integrated circuit (ASIC) or a field programmable gate array (FPGA). Further, the number of structural elements does not necessarily have to be equal to the number of pieces of hardware by which the structural elements are implemented. For example, a plurality of structural elements may be implemented by a single processor or circuit. Conversely, a single structural element may be implemented by a plurality of processors or circuits.

The type of the processor described in the present disclosure is not limited. For example, the processor may be a CPU, a micro processing unit (MPU), or a graphics processing unit (GPU).

Further, the present disclosure may also take the following configurations.
[1] A communication apparatus, including:
   a signal processor that includes an AI/ML model;
   a receiver that receives, from another communication apparatus, information on which to base learning; and
   a controller that sets the AI/ML model on the basis of the information on which to base learning.
[2] The communication apparatus according to [1], in which
   the information on which to base learning includes at least one of the type of AI/ML model, the number of input nodes, the number of output nodes, a layer configuration, a value of weighting coefficient, a layer in which learning is performed, or learning data.
[3] The communication apparatus according to [1] or [2], in which
   the information on which to base learning is determined on the basis of at least one of a cell in which the communication apparatus is situated, a frequency band used by the communication apparatus, or a synchronization signal block (SSB) used by the communication apparatus.
[4] The communication apparatus according to any one of [1] to [3], in which
   the information on which to base learning is included in one of system information, radio-resource-control (RRC) signaling, a MAC control element (MAC CE), and downlink control information (DCI) that are transmitted by the other communication apparatus.
[5] The communication apparatus according to [4], in which
   the information on which to base learning is included in the system information when the communication apparatus is in a radio-resource-control (RRC) idle state or in a radio-resource-control (RRC) inactive state.
[6] The communication apparatus according to [5], in which
   only when the communication apparatus has the capability of performing AI/ML-model-based signal processing, the controller acquires the information on which to base learning, the information being included in the system information.
[7] The communication apparatus according to [4], in which
   the information on which to base learning is included in the RRC signaling, the MAC CE, or the DCI when the communication apparatus is in a radio-resource-control (RRC) connected state.
[8] The communication apparatus according to any one of [1] to [7], in which
   the receiver further receives, from the other communication apparatus, information regarding whether additional learning is allowed to be performed, and
   when the information regarding whether additional learning is allowed to be performed is set to "unallowed", the controller does not additionally train the AI/ML model after the AI/ML model is set on the basis of the information on which to base learning.
[9] The communication apparatus according to any one of [1] to [7], in which
   the controller trains the AI/ML model after the AI/ML model is set on the basis of the information on which to base learning.
[10] The communication apparatus according to [9], further including
   a transmitter that transmits a signal to the other communication apparatus, in which
   after the training of the AI/ML model is performed, the controller feeds back information regarding the AI/ML model having performed learning to the other communication apparatus through the transmitter.
[11] The communication apparatus according to any one of [1] to [10], further including
   a transmitter that transmits a signal to the other communication apparatus, in which
   when the AI/ML model has already performed learning, the controller transmits information regarding the AI/ML model having performed learning to the other communication apparatus through the transmitter before the information on which to base learning is received from the other communication apparatus.
[12] The communication apparatus according to any one of [1] to [11], further including
   a transmitter that transmits a signal to the other communication apparatus, in which
   the controller transmits capability information regarding the capability of the communication apparatus to the other communication apparatus through the transmitter.
[13] The communication apparatus according to [12], in which
   the capability information includes information regarding an AI/ML model supported by the communication apparatus.
[14] The communication apparatus according to [12] or [13], in which
   the capability information includes information regarding the AI/ML model being included in the communication apparatus and having performed learning.
[15] The communication apparatus according to any one of [12] to [14], in which
   the capability information includes one of a piece of information regarding the remaining processing capability of the communication apparatus and a piece of information regarding a maximum value of the processing capability of the communication apparatus, or both of the pieces of information.
[16] The communication apparatus according to [15], in which
   the capability information is transmitted when the other communication apparatus makes a request for the capability information.
[17] The communication apparatus according to [15], in which
   the capability information is transmitted regularly on the basis of an instruction on how frequent the transmission is to be performed at which timing, the instruction being received from the other communication apparatus, or
   the capability information is transmitted regularly on the basis of predetermined frequency and a predetermined timing.
[18] The communication apparatus according to any one of [1] to [17], in which
   the signal processor includes a plurality of the AI/ML models, and
   the controller selects one of the plurality of the AI/ML models on the basis of at least one of a cell in which the communication apparatus is situated, a frequency band used by the communication apparatus, or an SSB used by the communication apparatus, and uses the selected one of the plurality of the AI/ML models.
[19] The communication apparatus according to any one of [1] to [18], in which
   the signal processor includes a plurality of the AI/ML models, and
   the controller selects one of the plurality of the AI/ML models according to a radio-resource-control (RRC) state of the communication apparatus, and uses the selected one of the plurality of the AI/ML models.
[20] The communication apparatus according to [19], in which
   when the communication apparatus is in an RRC idle state,
   the communication apparatus uses the AI/ML model set on the basis of the information on which to base learning, the information being included in system information received from the other communication apparatus, or
   the communication apparatus uses the AI/ML model set and trained on the basis of the information on which to base learning, the information being included in the system information received from the other communication apparatus.
[21] The communication apparatus according to [19] or [20], in which
   when the communication apparatus is in an RRC inactive state,
   the communication apparatus uses the AI/ML model set on the basis of the information on which to base learning, the information being received from the other communication apparatus during an RRC connection, or
   the communication apparatus uses the AI/ML model set and trained on the basis of the information on which to base learning, the information being received from the other communication apparatus during the RRC connection, or
   the communication apparatus uses the AI/ML model set on the basis of the information on which to base learning, the information being included in system information received from the other communication apparatus, or
   the communication apparatus uses the AI/ML model set and trained on the basis of the information on which to base learning, the information being included in the system information received from the other communication apparatus.
[22] The communication apparatus according to any one of [1] to [21], in which
   the other communication apparatus receives, from a data set providing apparatus, the information on which to base learning, the data set providing apparatus being accessible in common by communication apparatuses of different vendors.
[23] The communication apparatus according to any one of [1] to [22], in which
   the receiver further receives, from the other communication apparatus, information necessary to access a data set providing apparatus that is accessible in common by communication apparatuses of different vendors.
[24] The communication apparatus according to any one of [1] to [23], in which
   the other communication apparatus is a terminal apparatus,
   the communication apparatus is a base station that establishes wireless communication with the terminal apparatus, and
   the communication apparatus further includes a transmitter that transmits, to another base station, at least one of information regarding the AI/ML model having performed learning, the information on which to base learning of an AI/ML model, or capability information regarding the capability for an AI/ML model, the transmission being performed when the terminal apparatus is handed over from the base station to the other base station.
[25] A data set providing apparatus that is accessible in common by communication apparatuses of different vendors, the data set providing apparatus including:
   a storage that stores therein information on which to base learning of an AI/ML model;
   a receiver that receives, from a communication apparatus, a request for provision of the information on which to base learning of an AI/ML model; and
   a transmitter that transmits, to the communication apparatus, the information on which to base learning of an AI/ML model.
[26] The data set providing apparatus according to [25], in which
   the data set providing apparatus is defined as a network function.
[27] A method for training an AI/ML model, the method including:
   receiving information on which to base learning; and
   setting the AI/ML model on the basis of the information on which to base learning.
[28] A method for providing information on which to base learning of an AI/ML model, the method including:
   receiving a request for provision of the information on which to base learning; and
   transmitting the information on which to base learning to a transmission source that has transmitted the request for the provision.

### Reference Signs List

1 wireless communication system
10 management apparatus
11 communication section
12 storage
13 controller
20 base station (communication apparatus, another communication apparatus)
21 wireless communication section
211 transmitter
212 receiver
213 antenna
22 storage
23 decoder (signal processor)
25 controller
30 relay station (communication apparatus, another communication apparatus)
31 wireless communication section
311 transmitter
312 receiver
313 antenna
32 storage
33 decoder (signal processor)
35 controller
40 terminal apparatus (communication apparatus, another communication apparatus)
41 wireless communication section
411 transmitter
412 receiver
413 antenna
42 storage
43 decoder (signal processor)
45 controller
50 data set providing apparatus
51 storage
52 receiver
53 transmitter

## Claims

1. A communication apparatus, comprising:
a signal processor that includes an AI/ML model;
a receiver that receives, from another communication apparatus, information on which to base learning; and
a controller that sets the AI/ML model on a basis of the information on which to base learning.

2. The communication apparatus according to claim 1, wherein
the information on which to base learning includes at least one of the type of AI/ML model, the number of input nodes, the number of output nodes, a layer configuration, a value of weighting coefficient, a layer in which learning is performed, or learning data.

3. The communication apparatus according to claim 1, wherein
the information on which to base learning is determined on a basis of at least one of a cell in which the communication apparatus is situated, a frequency band used by the communication apparatus, or a synchronization signal block (SSB) used by the communication apparatus.

4. The communication apparatus according to claim 1, wherein
the information on which to base learning is included in one of system information, radio-resource-control (RRC) signaling, a MAC control element (MAC CE), and downlink control information (DCI) that are transmitted by the other communication apparatus.

5. The communication apparatus according to claim 4, wherein
the information on which to base learning is included in the system information when the communication apparatus is in a radio-resource-control (RRC) idle state or in a radio-resource-control (RRC) inactive state.

6. The communication apparatus according to claim 5, wherein
only when the communication apparatus has the capability of performing AI/ML-model-based signal processing, the controller acquires the information on which to base learning, the information being included in the system information.

7. The communication apparatus according to claim 4, wherein
the information on which to base learning is included in the RRC signaling, the MAC CE, or the DCI when the communication apparatus is in a radio-resource-control (RRC) connected state.

8. The communication apparatus according to claim 1, wherein
the receiver further receives, from the other communication apparatus, information regarding whether additional learning is allowed to be performed, and
when the information regarding whether additional learning is allowed to be performed is set to "unallowed", the controller does not additionally train the AI/ML model after the AI/ML model is set on the basis of the information on which to base learning.

9. The communication apparatus according to claim 1, wherein
the controller trains the AI/ML model after the AI/ML model is set on the basis of the information on which to base learning.

10. The communication apparatus according to claim 9, further comprising
a transmitter that transmits a signal to the other communication apparatus, wherein
after the training of the AI/ML model is performed, the controller feeds back information regarding the AI/ML model having performed learning to the other communication apparatus through the transmitter.

11. The communication apparatus according to claim 1, further comprising
a transmitter that transmits a signal to the other communication apparatus, wherein
when the AI/ML model has already performed learning, the controller transmits information regarding the AI/ML model having performed learning to the other communication apparatus through the transmitter before the information on which to base learning is received from the other communication apparatus.

12. The communication apparatus according to claim 1, further comprising
a transmitter that transmits a signal to the other communication apparatus, wherein
the controller transmits capability information regarding the capability of the communication apparatus to the other communication apparatus through the transmitter.

13. The communication apparatus according to claim 12, wherein
the capability information includes information regarding an AI/ML model supported by the communication apparatus.

14. The communication apparatus according to claim 12, wherein
the capability information includes information regarding the AI/ML model being included in the communication apparatus and having performed learning.

15. The communication apparatus according to claim 12, wherein
the capability information includes one of a piece of information regarding the remaining processing capability of the communication apparatus and a piece of information regarding a maximum value of the processing capability of the communication apparatus, or both of the pieces of information.

16. The communication apparatus according to claim 15, wherein
the capability information is transmitted when the other communication apparatus makes a request for the capability information.

17. The communication apparatus according to claim 15, wherein
the capability information is transmitted regularly on a basis of an instruction on how frequent the transmission is to be performed at which timing, the instruction being received from the other communication apparatus, or
the capability information is transmitted regularly on a basis of predetermined frequency and a predetermined timing.

18. The communication apparatus according to claim 1, wherein
the signal processor includes a plurality of the AI/ML models, and
the controller selects one of the plurality of the AI/ML models on a basis of at least one of a cell in which the communication apparatus is situated, a frequency band used by the communication apparatus, or an SSB used by the communication apparatus, and uses the selected one of the plurality of the AI/ML models.

19. The communication apparatus according to claim 1, wherein
the signal processor includes a plurality of the AI/ML models, and
the controller selects one of the plurality of the AI/ML models according to a radio-resource-control (RRC) state of the communication apparatus, and uses the selected one of the plurality of the AI/ML models.

20. The communication apparatus according to claim 19, wherein
when the communication apparatus is in an RRC idle state,
the communication apparatus uses the AI/ML model set on a basis of the information on which to base learning, the information being included in system information received from the other communication apparatus, or
the communication apparatus uses the AI/ML model set and trained on the basis of the information on which to base learning, the information being included in the system information received from the other communication apparatus.

21. The communication apparatus according to claim 19, wherein
when the communication apparatus is in an RRC inactive state,
the communication apparatus uses the AI/ML model set on a basis of the information on which to base learning, the information being received from the other communication apparatus during an RRC connection, or
the communication apparatus uses the AI/ML model set and trained on the basis of the information on which to base learning, the information being received from the other communication apparatus during the RRC connection, or
the communication apparatus uses the AI/ML model set on a basis of the information on which to base learning, the information being included in system information received from the other communication apparatus, or
the communication apparatus uses the AI/ML model set and trained on the basis of the information on which to base learning, the information being included in the system information received from the other communication apparatus.

22. The communication apparatus according to claim 1, wherein
the other communication apparatus receives, from a data set providing apparatus, the information on which to base learning, the data set providing apparatus being accessible in common by communication apparatuses of different vendors.

23. The communication apparatus according to claim 1, wherein
the receiver further receives, from the other communication apparatus, information necessary to access a data set providing apparatus that is accessible in common by communication apparatuses of different vendors.

24. The communication apparatus according to claim 1, wherein
the other communication apparatus is a terminal apparatus,
the communication apparatus is a base station that establishes wireless communication with the terminal apparatus, and
the communication apparatus further comprises a transmitter that transmits, to another base station, at least one of information regarding the AI/ML model having performed learning, the information on which to base learning of an AI/ML model, or capability information regarding the capability for an AI/ML model, the transmission being performed when the terminal apparatus is handed over from the base station to the other base station.

25. A data set providing apparatus that is accessible in common by communication apparatuses of different vendors, the data set providing apparatus comprising:
a storage that stores therein information on which to base learning of an AI/ML model;
a receiver that receives, from a communication apparatus, a request for provision of the information on which to base learning of an AI/ML model; and
a transmitter that transmits, to the communication apparatus, the information on which to base learning of an AI/ML model.

26. The data set providing apparatus according to claim 25, wherein
the data set providing apparatus is defined as a network function.

27. A method for training an AI/ML model, the method comprising:
receiving information on which to base learning; and
setting the AI/ML model on a basis of the information on which to base learning.

28. A method for providing information on which to base learning of an AI/ML model, the method comprising:
receiving a request for provision of the information on which to base learning; and
transmitting the information on which to base learning to a transmission source that has transmitted the request for the provision.
